# EUROPÄISCHE PATENTSCHRIFT

(11) **EP 2 900 414 B1**
(45) Veröffentlichungstag und Bekanntmachung des Hinweises auf die Patenterteilung: **12.08.2020**
(21) Anmeldenummer: 13766083.3
(22) Anmeldetag: 23.09.2013
(51) Int. Cl.: B23K 11/00, B21J 15/08, B21J 15/02, B23K 11/11, B23K 11/20

(54) **VERFAHREN ZUM VERBINDEN VON BAUTEILEN MIT EINEM SCHWEISSHILFSFÜGETEIL**
METHOD FOR CONNECTING COMPONENTS BY WAY OF A WELDING AUXILIARY JOINING PART
PROCÉDÉ POUR RELIER DES ÉLÉMENTS À L'AIDE D'UNE PIÈCE DE JONCTION D'AIDE AU SOUDAGE

(30) Priorität: 25.09.2012 DE 102012018866
(43) Veröffentlichungstag der Anmeldung: 05.08.2015
(73) Patentinhaber: Böllhoff Verbindungstechnik GmbH, 33649 Bielefeld (DE)
(72) Erfinder: DRAHT, Torsten, 33758 Schloß Holte-Stukenbrock (DE); HARTWIG-BIGLAU, Sergej, 32120 Hiddenhausen (DE)
(74) Vertreter: Heyer, Volker
(86) Internationale Anmeldenummer: PCT/EP2013/069752
(87) Internationale Veröffentlichungsnummer: WO 2014/048885

(56) Entgegenhaltungen:
- DE-A1- 10 060 390
- DE-A1-102004 025 492
- DE-A1-102007 036 416
- DE-A1-102010 006 400
- DE-A1-102010 035 951
- US-A- 5 739 498

## Beschreibung

### 1. Gebiet der Erfindung

Die vorliegende Erfindung betrifft ein Verfahren zum Verbinden von mehreren Bauteilen mithilfe eines Schweißhilfsfügeteils und eines mechanisch-thermischen Setz-Schweiß-Prozesses. Mithilfe dieses mechanisch-thermischen Setz-Schweiß-Prozesses werden mindestens ein erstes Bauteil aus gut oder schlecht schweißbarem Material und mindestens ein zweites Bauteil aus gut schweißbarem Material durch das Schweißhilfsfügeteil miteinander verbunden.

### 2. Hintergrund der Erfindung

Das Schweißen ist ein weit verbreitetes Verfahren, um Bauteile aus schweißbarem Material, wie beispielsweise Stahl, miteinander zu verbinden. Beispielgebende Schweißverfahren sind das Widerstandspunktschweißen und das Bolzenschweißen, bei denen punktuell zwei sich gegenüberliegende Bauteile mittels Schweißen miteinander verbunden werden. Ein weiteres Schweißverfahren ist das Bolzenschweißen mit Lichtbogen.

In verschiedenen Industriezweigen müssen mittlerweile Bauteile miteinander verbunden werden, die teilweise aus nicht oder schlecht schweißbarem Material bestehen. Nichtsdestotrotz stellt das Schweißen ein effektives Verbindungsverfahren selbst für diese Bauteile aus nicht oder schlecht schweißbarem Material dar. Zu diesem Zweck wird ein Schweißhilfsfügeteil aus schweißbarem Material in dem Bauteil aus nicht oder schlecht schweißbarem Material befestigt. Nachfolgend wird eine Schweißverbindung zwischen einem Bauteil aus schweißbarem Material und dem Schweißhilfsfügeteil hergestellt, sodass das Bauteil aus schweißbarem Material und das Bauteil aus nicht oder schlecht schweißbarem Material über das Schweißhilfsfügeteil miteinander verbunden sind. Beispiele für Bauteile aus nicht oder schlecht schweißbarem Material sind Aluminiumbleche, Formteile aus Kunststoff oder faserverstärktem Kunststoff, beispielsweise kohlefaserverstärkter Kunststoff, um nur einige Beispiele zu nennen. Das oben beschriebene Verfahren geht beispielsweise aus der deutschen Patentanmeldung DE 100 15 713 A1 hervor.

Aus der deutschen Patentanmeldung 10 2005 006 253 A1 ist ein Verbindungsverfahren mittels Schweißen zwischen einem Bauteil aus nicht oder schlecht schweißbarem Material und einem Bauteil aus schweißbarem Material beschrieben. Hier wird ein Bolzen mit einem Schaft und einem Kopf aus schweißbarem Material in ein vorgefertigtes Loch in dem Bauteil aus nicht oder schlecht schweißbarem Material eingesetzt und nachfolgend mit dem Bauteil aus schweißbarem Material verschweißt. Um den Bolzen mit seinem Schaft verlässlich im vorgelochten Bereich des Bauteils aus nicht oder schlecht schweißbarem Material zu befestigen, wird der Schaft des Bolzens nach dem Schweißen lateral durch Stauchen verformt, sodass sich eine kraftschlüssige Verbindung zwischen dem Schaft des Bolzens und der Innenwand des Lochs des Bauteils ergibt. Aufgrund der Vielzahl der Verfahrensschritte ist das hier beschriebene Verbindungsverfahren technisch aufwändig und zeitintensiv.

In den deutschen Patentanmeldungen DE 10 2004 025 492 A1 und DE 10 2007 036 416 A1 werden jeweils Nieten, Bolzen oder Nägel als Schweißhilfsfügeteil in Bauteilen aus nicht oder schlecht schweißbarem Material gesetzt. Die Spitze des Schweißhilfsfügeteils ragt an der einen Seite des Bauteils aus nicht oder schlecht schweißbarem Material hervor und bildet einen Schweißpunkt mit sehr kleiner Kontaktfläche zum Kontaktieren des gegenüberliegenden Bauteils aus schweißbarem Material. Sobald das Schweißhilfsfügeteil und das Bauteil aus schweißbarem Material, beispielsweise mithilfe von Widerstandsschweißen in der Art des Widerstandspunktschweißens oder des Widerstandsbolzenschweißens, miteinander verbunden werden, wird die Spitze oder Schneide des Schweißhilfsfügeteils aufgeschmolzen, sodass sich eine sogenannte Schweißlinse ausbildet. Aufgrund der geringen Kontaktfläche zwischen Schweißhilfsfügeteil und Bauteil aus schweißbarem Material an der Spitze oder im Schneidbereich des Schweißhilfsfügeteils ist die Kontaktzone zum Schweißen relativ klein. Dies verlängert den Schweißvorgang oder verschlechtert die Schweißverbindung aufgrund der geringen Kontaktfläche im Vergleich zu einander gegenüberliegenden Bauteilen, die sich in einem größeren Bereich kontaktieren. Entsprechend dem kleinen Kontaktbereicht zwischen Schweißhilfsfügeteil und dem Bauteil aus schweißbarem Material fällt die sich ausbildende Schweißlinse klein aus. Dies beeinträchtigt u. a. die mechanische Belastbarkeit sowie die Lebensdauer der hergestellten Verbindung. Zudem wird bei der Nutzung eines Halbhohlstanzniets als Schweißhilfsfügeteil ein Abfallbutzen aus nicht oder schlecht schweißbarem Material erzeugt. Dieser befindet sich beim nachfolgenden Schweißen in der Schweißzone und im Bereich der Schweißlinse, sodass die entstehende Schweißverbindung durch diese Verschmutzung in ihrer Qualität beeinträchtigt wird.

Des Weiteren wird in der DE 10 2004 025 492 A1 als vorteilhaft angesehen, mithilfe des Setzvorgangs des Schweißhilfsfügeteils in dem Bauteil aus nicht oder schlecht schweißbarem Material das Bauteil aus schweißbarem Material im Kontaktbereich für das spätere Schweißen mechanisch zu deformieren. Im Speziellen dringt eine Spitze oder eine Schneide des Schweißhilfsfügeteils in das Bauteil aus schweißbarem Material ein oder erzeugt in diesem Bauteil aus schweißbarem Material eine Vertiefung. Diese Vertiefung soll dann die Ausbildung einer ausreichend großen Schweißlinse während des Widerstandsschweißens zwischen dem Schweißhilfsfügeteil und dem Bauteil aus schweißbarem Material im Bereich dieser Senke bzw. Vertiefung unterstützen. Zur Verwirklichung dieses Verfahrens ist es jedoch erforderlich, bereits alle miteinander zu verbindenden Bauteile übereinander anzuordnen, bevor das Schweißhilfsfügeteil gesetzt wird. Andernfalls ist ein zusätzlicher Arbeitsaufwand erforderlich, um die Vertiefung im Bauteil aus schweißbarem Material zu erzeugen und gegenüber den bereits gesetzten Schweißhilfsfügeteilen auszurichten. Dies ist aufwändig, zeitintensiv, erfordert zudem zusätzlichen apparativen Aufwand zur genauen Positionierung der miteinander zu verbindenden Bauteile und ist in der Wahl der möglichen Schweißverfahren und der Prozessabfolgen limitiert.

DE 100 60 390 A1 beschreibt ein Stanznietverfahren, bei dem ein Stanzniet mithilfe eines Elektrodenstempels durch ein erstes elektrisch nicht leitendes Material, wie beispielsweise Kunststoff, hindurch getrieben und mit einem zweiten, auf einer Elektrodenmatrize aufliegenden elektrisch leitenden Material verbunden wird. Elektrodenstempel und Elektrodenmatrize sind an entgegensetzte Pole einer Spannungsquelle angeschlossen. Sobald der Stanzniet das erste Material durchdrungen hat und im Kontakt mit dem zweiten elektrisch leitenden Material steht, findet ein Stromfluss durch den Stanzniet statt. Da sich der Stanzniet aufgrund des Stromflusses erwärmt, wird dadurch der weitere Fügeprozess des Stanzniets unterstützt. Da in dem hier beschriebenen Stanznietverfahren Hohl-, Halbhohl- oder Vollnieten eingesetzt werden, treibt der Stanzniet während seines Fügevorgangs durch das erste elektrisch nicht leitende Material Abfallmaterial vor sich her. Dieses Abfallmaterial behindert einen elektrischen Kontakt zwischen Stanzniet und zweitem Material und somit den Stromfluss durch den Stanzniet. Zudem ist es von Nachteil, dass der Stanzniet das elektrisch nicht leitende Material im Kaltzustand durchdringt, was gerade in spröden Kunststoffen und ähnlichen Materialen Rissbildung und andere Versagensmechanismen initiieren.

DE 10 2010 020 569 A1 beschreibt ein thermisches Fügen eines ersten elektrisch nicht leitenden Bauelements mit einem zweiten elektrisch leitenden Bauelement basierend auf einer elektrischen Erwärmung. Zu diesem Zweck wird zunächst in das elektrisch nicht leitende Bauteil ein Fügehilfsmittel eingeformt, welches aus einem elektrisch leitenden Material besteht. In einem dem Verbindungsverfahren vorgeschalteten Installationsprozess wird das Fügehilfsmittel mittels Anwalzen, Einprägen, Gesenkformen, Eindrücken, Tiefen oder Kleben in dem ersten Bauteil befestigt. Das Fügehilfsmittel stellt den elektrisch leitfähigen Anlagekontakt für das nachfolgende elektrisch-thennische Verschweißen mit dem zweiten Bauteil bereit. Zu diesem Zweck werden das erste Bauteil mit dem Fügehilfsmittel und das zweite Bauteil zwischen einander gegenüberliegendem Elektrodenstempel und einer Elektrodenmatrize positioniert. Ein elektrischer Stromfluss durch das Fügehilfsmittel und das elektrisch leitende zweite Bauteil zwischen Elektrodenstempel und Elektrodenmatrize führt zu einem Verschweißen des Fügehilfsmittels und des zweiten Bauteils an den aneinander anliegenden Grenzflächen. Auch das hier beschriebene thermische Fügeverfahren hat seinen Nachteil darin, dass zunächst in einem vorgeschalteten Verfahren ein Hilfsfügemittel in dem ersten Bauteil aus elektrisch nicht leitendem Material befestigt werden muss. Daher sind an dieser Stelle verschiedene Verarbeitungsschritte des Hilfsfügemittels und des ersten Bauteils erforderlich, bevor das erste Bauteil und das zweite Bauteil zwischen Elektrodenstempel und Elektrodenmatrize miteinander verbunden werden könnten.

Ein Verfahren zum Verbinden eines ersten elektrisch leitfähigen Plattenelements aus Metall mit einem zweiten elektrisch leitfähigen Plattenelement aus Metall, das dem Metall für das erste Plattenelement nicht ähnlich ist, unter Verwendung von mindestens einem Ankerstift, der aus demselben Metall wie das zweite Plattenelement hergestellt ist, ist in US 5,739,498 beschrieben. Das erste und das zweite Plattenelement überlappen einander anfänglich, um eine Plattenanordnung bereitzustellen, die anschließend unter Druck zwischen Schweißelektroden geklemmt wird, wobei der Ankerstift zwischen einer der Schweißelektroden und dem ersten Plattenelement angeordnet ist. Danach wird den Schweißelektroden ein elektrischer Strom zugeführt, um anfänglich zu bewirken, dass ein Abschnitt des ersten Plattenelements, der in Kontakt mit dem Ankerstift gehalten wird, durch Widerstandserhitzung des Ankerstiftes schmilzt. Dadurch wird es ermöglicht, dass der Ankerstift das erste Plattenelement durchsticht. Anschließend wird bewirkt, dass der Ankerstift, der sich vollständig über eine Dicke des ersten Plattenelements erstreckt, mit dem zweiten Plattenelement verschweißt wird.

Es ist daher die Aufgabe vorliegender Erfindung, ein im Vergleich zum Stand der Technik weniger zeitintensives Verbindungsverfahren zwischen mindestens einem Bauteil aus schweißbarem oder nicht schweißbarem Material und mindestens einem Bauteil aus schweißbarem Material bereitzustellen.

### 3. Zusammenfassung der Erfindung

Die oben genannte Aufgabe wird durch die Verbindungsverfahren mit einem Schweißhilfsfügeteil gemäß den unabhängigen Ansprüchen 1 bis 3 gelöst. Vorteilhafte Ausgestaltungen und Weiterentwicklungen vorliegender Erfindung gehen aus der Beschreibung, den begleitenden Zeichnungen sowie den anhängenden Ansprüchen hervor.

Das erfindungsgemäße Verbindungsverfahren nach Anspruch 1 nutzt ein Schweißhilfsfügeteil, um mindestens ein erstes Bauteil ohne Vorlochen des mindestens einen ersten Bauteils, dass aus einem nicht schweißbaren bzw. elektrisch nicht leitenden Material besteht, mindestens einem zweiten Bauteil aus schweißbarem bzw. elektrisch leitendem Material oder einem Abschnitt aus schweißbarem bzw. elektrisch leitendem Material miteinander zu verbinden. Das erfindungsgemäße Verbindungsverfahren weist die folgenden Schritte auf: Eintreiben des Schweißhilfsfügeteils in das mindestens eine erste Bauteil mit einer kombinierten mechanisch-thermischen Belastung zumindest des Schweißhilfsfügeteils, wobei vorzugsweise kein Abfallmaterial von dem mindestens einen ersten Bauteil getrennt wird, Deformieren des Schweißhilfsfügeteils unter kombinierter mechanisch-thennischer Belastung am mindestens einen zweiten Bauteil und Verschweißen des Schweißhilfsfügeteils mit dem mindestens einen zweiten Bauteil, sodass das mindestens eine erste Bauteil und das mindestens eine zweite Bauteil über das Schweißhilfsfügeteil miteinander verbunden sind, wobei das Verbindungsverfahren kontinuierlich in einem mechanisch-thermischen Setz-Schweiß-Prozess stattfindet.

Mit Hilfe eines bolzenähnlichen und aus schweißbarem Material bestehenden Schweißhilfsfügeteil werden mindestens ein erstes Bauteil und mindestens ein zweites Bauteil basierend auf einem kontinuierlich ablaufenden mechanisch-thermischen Setz-Schweiß-Prozess miteinander verbunden. Während dieses kontinuierlich ablaufenden Verbindungsverfahrens, werden mechanische Kräfte dazu eingesetzt, das Schweißhilfsfügeteil in dem mindestens einen ersten Bauteil aus schweißbarem oder nicht schweißbarem Material zu setzen. Während dieses Setzprozesses wird das Schweißhilfsfügeteil durch einen elektrischen Stromfluss zumindest innerhalb des Schweißhilfsfügeteils erwärmt, sodass die hier im Schweißhilfsfügeteil erzeugte Wärmemenge den Setzprozess des Schweißhilfsfügeteils in dem mindestens einen ersten Bauteil erleichtert und unterstützt. Die im Schweißhilfsfügeteil erzeugte Wärme erleichtert einerseits das Eindringen des Schweißhilfsfügeteils in das mindestens eine erste Bauteil. Zudem erleichtert diese Wärmemenge eine Verformung des Schweißhilfsfügeteils im weiteren Verlauf des kontinuierlichen mechanisch-thermischen Setz-Schweiß-Prozesses. Die Wärmemenge im Schweißhilfsfügeteil unterstützt eine Stauchung des Schweißhilfsfügeteils in axialer Richtung an dem mindestens einen zweiten Bauteil, sodass sich eine vorteilhafte Schweißfläche an der Grenzfläche zwischen Schweißhilfsfügeteil und dem mindestens einen zweiten Bauteil ausbildet.

Mithilfe eines bevorzugten Widerstandsbolzenschweißens oder eines Widerstandspunktschweißens wird dann das Schweißhilfsfügeteil mit dem mindestens einen zweiten Bauteil verschweißt, welches aus schweißbarem Material besteht. Als Ergebnis werden das mindestens eine erste Bauteil und das mindestens eine zweite Bauteil über das Schweißhilfsfügeteil in einem kontinuierlich ablaufendem mechanisch-thermischen Setz-Schweiß-Prozess miteinander verbunden. Im Rahmen dieses kontinuierlichen Verbindungsverfahrens ist es nicht erforderlich, dass das Schweißhilfsfügeteil in voneinander getrennten Verfahrensschritten beispielsweise zunächst in das erste Bauteil oder zunächst in das zweite Bauteil eingebracht wird. Zudem ist bemerkenswert, dass aufgrund des Stromflusses im Schweißhilfsfügeteil ein Warmeinpressen des Schweißhilfsfügeteils in das mindestens eine erste Bauteil erfolgt. Da dieses Warmeinpressen und Stauchen des Schweißhilfsfügeteils zu einer Verformung des Schweißhilfsfügeteils innerhalb des mindestens einen ersten Bauteils führt, entstehen durch diese Verformung vorzugsweise zusätzliche form- und/oder kraftschlüssige Verbindungen zwischen Schweißhilfsfügeteil und dem mindestens einen ersten Bauteil, die die herzustellende Verbindung unterstützen.

Die vorliegende Erfindung umfasst zudem ein Verbindungsverfahren nach Anspruch 2 mithilfe eines elektrisch leitenden bzw. aus einem schweißbaren Material bestehenden Schweißhilfsfügeteils, um mindestens ein erstes Bauteil aus schweißbarem oder nicht schweißbarem bzw. elektrisch leitendem oder nicht leitendem Material ohne Vorlochen des mindestens einen ersten Bauteils mit mindestens einem zweiten Bauteil aus schweißbarem bzw. elektrisch leitendem Material oder mit einem Abschnitt aus schweißbarem bzw. elektrisch leitendem Material zu verbinden. Dieses Verbindungsverfahren weist die folgenden Schritte auf: Eintreiben des Schweißhilfsfügeteils in das mindestens eine erste Bauteil mit einer kombinierten mechanisch-thermischen Belastung zumindest des Schweißhilfsfügeteils, wobei kein Abfallmaterial von dem mindestens einen ersten Bauteil getrennt wird, Deformieren des Schweißhilfsfügeteils unter kombinierter mechanisch-thermischer Belastung an einer Matrize an einer Austrittsstelle aus dem ersten Bauteil, sodass ein Schweißkopf des Schweißhilfsfügeteils entsteht, Positionieren des ersten Bauteils mit Schweißhilfsfügeteil und Schweißkopf auf dem mindestens einen zweiten Bauteil, sodass der Schweißkopf am mindestens einen zweiten Bauteil anliegt, und Verschweißen des Schweißkopfes des Schweißhilfsfügeteils mit dem mindestens einen zweiten Bauteil, sodass das mindestens eine erste Bauteil und das mindestens eine zweite Bauteil über das Schweißhilfsfügeteil miteinander verbunden sind.

Das oben beschriebene Verbindungsverfahren ist vorzugsweise als ein nicht kontinuierlich ablaufender mechanisch-thermischer Setz-Schweiß-Prozess ausgestaltet. Auf dieser Grundlage ist es möglich, dass zunächst das Schweißhilfsfügeteil in das mindestens eine erste Bauteil eingebracht wird. Gerade wenn das mindestens eine erste Bauteil aus einem nicht schweißbarem Material besteht, wird auf diese Weise das mindestens eine erste Bauteil auf ein Verschweißen mit mindestens einem zweiten Bauteil aus schweißbarem Material vorbereitet. Nachdem das Schweißhilfsfügeteil in dem mindestens einen ersten Bauteil vorgesehen worden ist, wird es bevorzugt zu dem mindestens einen zweiten Bauteil transportiert und mit diesen durch Verschweißen verbunden. Da dieses Verbindungsverfahren nicht im Rahmen eines kontinuierlichen mechanisch-thermischen Setz-Schweiß-Prozess ablaufen, werden das mindestens eine erste Bauteil basierend auf dem Vorsehen des Schweißhilfsfügeteils darin auf ein späteres Befestigen an mindestens einem zweiten Bauteil, wie beispielsweise einem Fahrzeugrahmen oder einer Trägerstruktur vorbereitet, dieses Verbinden mit dem mindestens einen zweiten Bauteil kann daher zu einem späteren Zeitpunkt erfolgen, sodass hier auch ein Transport des zum Verbinden vorbereiteten mindestens einen ersten Bauteils mit Schweißhilfsfügeteil zu einem anderen Herstellungs- bzw. Verarbeitungsort möglich ist.

Während das Schweißhilfsfügeteil in das mindestens eine erste Bauteil eingetrieben wird, ist es einerseits einer mechanischen Belastung, im Speziellen einer Fügekraft, und andererseits einer thermischen Belastung, vorzugsweise einem zumindest das Schweißhilfsfügeteil erwärmenden elektrischen Strom, ausgesetzt. Gerade die zusätzliche thermische Belastung unterstützt das Eintreiben des Schweißhilfsfügeteils im Vergleich zu bekannten Stanzniet-Setzprozessen. Während des Eintreibens wird das Schweißhilfsfügeteil bei gleichzeitiger mechanischer und thermischer Belastung an der einem Stempel gegenüberliegenden Matrize deformiert, vorzugsweise in axialer Richtung des Schweißhilfsfügeteils gestaucht. Dieses Stauchen findet statt, wenn das Schweißhilfsfügeteil während des Eintreibens die Austrittsstelle aus dem mindestens einen ersten Bauteil erreicht. Da diese Austrittsstelle durch die Matrize blockiert wird, findet hier ein Deformieren des Schweißhilfsfügeteils statt. Das Deformieren führt zumindest zu einer radialen Aufweitung und vorzugsweise zu einer Abflachung des Schweißhilfsfügeteils, sodass einerseits ein verlässlicher Halt des Schweißhilfsfügeteils in dem mindestens einen ersten Bauteil unterstützt wird und andererseits durch die Abflachung des Schweißhilfsfügeteils an der Austrittsstelle ein Schweißkopf des Schweißhilfsfügeteils entsteht. Unter Schweißkopf wird allgemein jede Kontaktfläche des Schweißhilfsfügeteils verstanden, die durch Anlage an dem mindestens einen zweiten Bauteil einen elektrischen Kontakt zwischen Schweißhilfsfügeteil und zweitem Bauteil herstellt. Dieser elektrische Kontakt ist Grundlage dafür, dass das Schweißhilfsfügeteil mit dem zweiten Bauteil verschweißt werden kann. Da der Schweißkopf eine unterschiedliche flächige Ausdehnung aufweisen kann, wird er teilweise auch als Schweißpunkt bezeichnet. Nachdem das erste Bauteil mit dem Schweißhilfsfügeteil mit Schweißkopf ausgestattet worden ist, wird es vorzugsweise zu dem mindestens einem zweiten Bauteil transportiert, um dann mit diesem verschweißt zu werden. Das Verschweißen erfolgt durch Aufbringen einer mechanisch-thermischen Belastung gerade zwischen Schweißhilfsfügeteil und dem mindestens einen zweiten Bauteil. Da das Schweißhilfsfügeteil verlässlich mit dem mindestens einen ersten Bauteil verbunden ist, erfolgt über dieses Verschweißen eine verlässliche Verbindung des mindestens einen ersten und zweiten Bauteils über das Schweißhilfsfügeteil.

Gemäß einer bevorzugten Ausführungsform ist das Schweißhilfsfügeteil ein Bolzen mit einem Kopf oder zumindest einem Spitzenbereich, bei dem ein Kopfdurchmesser größer als eine maximale Dicke des Spitzenbereichs ist. Des Weiteren ist es bevorzugt, dass der Bolzen nach Abschluss des kontinuierlichen Verbindungsverfahrens mit einer dem mindestens einen ersten Bauteil zugewandten Kopfunterseite auf dem mindestens einen ersten Bauteil aufliegt oder von diesem beabstandet ist. Gemäß einer weiteren bevorzugten Ausführungsform ist das Schweißhilfsfügeteil ein Bolzen mit einem Kopf, bei dem ein Kopfdurchmesser eine maximale Dicke des Spitzenbereichs nicht übersteigt. In diesem Zusammenhang ist es ebenfalls bevorzugt, dass der Bolzen mit dem Kopf nach Abschluss des kontinuierlichen Verbindungsverfahrens bündig mit dem mindestens einen ersten Bauteil abschließt oder von diesem übersteht.

Da beim Setzen des Schweißhilfsfügeteils in das mindestens eine erste Bauteil in Abhängigkeit von dem Material des ersten Bauteils Material entgegen der Fügerichtung verdrängt werden kann, weist der Kopf des Schweißhilfsfügeteils vorzugsweise an einer dem Spitzenbereich des Schweißhilfsfügeteils zugewandten Seite eine Ringnut zur Aufnahme einer Materialverformung des zum Kopf benachbarten Bauteils auf. Zudem werden vorzugsweise unterschiedliche Spitzengeometrien des Schweißhilfsfügeteils ausgewählt, um das Schweißhilfsfügeteil an die Materialien der miteinander zu verbindenden Bauteile anzupassen. In diesem Zusammenhang ist es beispielsweise bevorzugt, dass das Schweißhilfsfügeteil einen Spitzenbereich mit einer ogivalen Spitze mit einem Ogivalitätsfaktor aus einem Bereich von 1-10 aufweist. Gemäß einer anderen Ausführungsform ist die Spitze des Schweißhilfsfügeteils kegelförmig, rund, parabelförmig oder in Form einer Pyramide ausgestaltet. In Abhängigkeit von den miteinander zu verbindenden Materialien wird eine der genannten oder eine andere vorteilhafte Spitzengeometrie des Schweißhilfsfügeteils ausgewählt, um das Auftreten von Versagensmechanismen in den Bauteilmaterialien zu reduzieren.

Wie bereits oben erwähnt worden ist, ist das Schweißhilfsfügeteil in Form eines Bolzens aus schweißbarem Material, wie beispielsweise Stahl mit einem Kohlenstoffäquivalent von 0,2 bis 0,8, vorzugsweise von 0,3 bis 0,6, ausgebildet. Das Kohlenstoffäquivalent (CEV) ist in der Werkstoffkunde ein Maß zur Beurteilung der Schweißeignung von unlegierten und niedriglegierten Stählen. Der Kohlenstoffgehalt und eine Vielzahl anderer Legierungselemente im Stahl beeinflussen sein Verhalten. Zur Beurteilung der Schweißeignung ist deshalb im Kohlenstoffäquivalent der Kohlenstoffgehalt und der gewichtete Anteil der Elemente, welche die Schweißeignung des Stahls ähnlich beeinflussen, wie es vom Kohlenstoff zu erwarten wäre, zu einem Zahlenwert zusammengefasst. Bevorzugt eignet sich dieses Schweißhilfsfügeteil zum Setzen mithilfe einer im Vergleich zu herkömmlichen Verfahren erhöhten Setzgeschwindigkeit von > 0,5 m/s bis 5 m/s und vorzugsweise von 1 m/s bis 4 m/s. Diese bevorzugte Setzgeschwindigkeit wird aufgrund der vorteilhaften mechanisch-thermischen Belastung des Schweißbilfsfügeteils während des Eintreibens erzielt. In gleicher Weise ist es aber auch bevorzugt, das Schweißhilfsfügeteil mit bekannten Setzverfahren zu setzen, die beispielsweise für Halbhohlstanzniete Anwendung finden. Für die verschiedenen Setzverfahren hat es sich als besonders vorteilhaft erwiesen, den Bolzen ohne Schaft auszubilden. Der Bolzen umfasst einen Spitzenbereich, der sich in Längsrichtung des Schweißhilfsfügeteils erstreckt. Der Spitzenbereich umfasst eine maximale Dicke angrenzend an den Kopf oder angrenzend an einen Schaft des Schweißhilfsfügeteils. An seinem dem Kopf abgewandten Ende umfasst der Spitzenbereich eine Spitze, zu der der Spitzenbereich kontinuierlich oder stufenweise zuläuft.

Während des Eintreibens findet basierend auf der oben beschriebenen Spitzengeometrie des Schweißhilfsfügeteils eine vorteilhafte Materialverdrängung im Bauteil aus nicht schweißbarem oder schweißbarem Material in radialer Richtung bezogen auf den Schaft des Bolzens und im Bereich der Spitze des Schafts statt. Ein weiterer Vorteil besteht darin, dass sich das Schweißhilfsfügeteil aufgrund dieser Formgebung in seinem Spitzenbereich mechanisch derart deformieren lässt, dass sich ein für das spätere Schweißen des Schweißhilfsfügeteil vorteilhafter Schweißkopf oder Schweißpunkt ausbildet. Der Schweißkopf stellt eine verlässliche Kontakttläche zum Widerstandsschweißen oder Lichtbogenschweißen am Schweißhilfsfügeteil bereit. Daher wird im Weiteren auch ein nur als Fläche vorhandener Schweißpunkt allgemein als Schweißkopf bezeichnet und verstanden. Eine Anpassung an unterschiedliche Materialstärken des mindestens einen Bauteils aus nicht schweißbarem oder schweißbarem Material erfolgt bevorzugt über eine entsprechende Anpassung der Länge des Schafts oder des Spitzenbereichs des Schweißhilfsfügeteils bei gleichbleibender Spitzengeometrie.

Gemäß unterschiedlicher bevorzugter Ausführungsformen des Schweißhilfsfügeteils ist der Kopf in seinem Durchmesser größer oder gleich einem Durchmesser des Schafts oder einer maximalen Dicke des Spitzenbereichs des Schweißhilfsfügeteils ausgebildet. Ist der Kopfdurchmesser größer als der Durchmesser des Schaftes oder der maximalen Dicke des Spitzenbereichs, so ist vorzugsweise an der dem Schaft zugewandten Seite des Kopfes die Ringnut zur Aufnahme einer Materialverformung eines zum Kopf benachbarten Bauteils ausgebildet. In gleicher Weise ist es bevorzugt, anstelle der Ringnut oder in Kombination mit der Ringnut in radialer Richtung verlaufende Rillen oder Rippen auszuformen, um Aufnahmeräume zur Aufnahme einer Materialverformung eines zum Kopf benachbarten Bauteils bereitzustellen.

Um des Weiteren eine verlässliche Verbindung zwischen dem Schweißhilfsfügeteil und einem Bauteil aus nicht oder schlecht schweißbarem Material bereitzustellen, ist der Schaft des Schweißhilfsfügeteils zylindrisch, zylinderähnlich oder zumindest teilweise keglig ausgebildet. Zylinderähnlich schließt dabei auch eine polygonale Querschnittsgestalt des Schweißhilfsfügeteils ein. Gemäß einer weiteren bevorzugten Ausführungsform unterstützt eine äußere Rändelung oder Profilierung des Schafts des Schweißhilfsfügeteils die Verbindung zu dem Bauteil aus gut, nicht oder schlecht schweißbarem Material, in welches das Schweißhilfsfügeteils ohne Vorlochen gesetzt worden ist.

Des Weiteren ist es bevorzugt, den Spitzenbereich des Schweißhilfsfügeteils mit oder ohne Schaft mit der kegelförmigen oder der pyramidenförmigen Spitze auszubilden. In diesem Zusammenhang hat es sich als vorteilhaft erwiesen, wenn die Seitenflächen der Spitze mit der Längsachse des Schweißhilfsfügeteils einen Winkel im Bereich von 5° bis 60°, vorzugsweise von 15° bis 40° und noch mehr bevorzugt von 20° bis 30°, einschließen.

Gemäß einer weiteren bevorzugten Ausgestaltung des kontinuierlichen und des diskontinuierlichen Verbindungsverfahrens erfolgt ein Stauchen des Schweißhilfsfügeteils an dem mindestens einen zweiten Bauteil aus schweißbarem Material oder der Matrize, das/die an der Austrittsstelle des Schweißhilfsfügeteils aus dem mindestens einen ersten Bauteil angeordnet ist. Da das Schweißhilfsfügeteil mithilfe einer mechanisch-thermischen Belastung in das mindestens eine erste Bauteil eingetrieben wird, wird das nachfolgende Stauchen durch die bereits erfolgte Erwärmung des Schweißhilfsfügeteils unterstützt. Gemäß einer weiteren bevorzugten Ausführungsform, die unten näher erläutert ist, führt die dem Schweißhilfsfügeteil zugeführte Energie neben einer Erwärmung des Schweißhilfsfügeteils ebenfalls zu einer Erwärmung des mindestens einen ersten Bauteils. Diese Erwärmung unterstützt ebenfalls das Stauchen und Verformen des Schweißhilfsfiigeteils im Sinne der angestrebten Verbindung, sodass sich eine möglichst großflächige Schweißfläche und später Schweißlinse ausbildet.

Gemäß einer ersten Alternative der vorliegenden Erfindung besteht das mindestens eine erste Bauteil aus einem nicht schweißbaren bzw. elektrischen nicht leitenden Material und das Schweißhilfsfügeteil wird über einen Elektrodenstempel eingetrieben und über einen Elektrodenniederhalter geführt. In diesem Zusammenhang bezeichnet Elektrodenstempel einen Stempel bekannter Bauart zum Eintreiben von Stanznieten oder allgemein Schweißhilfsfügeteilen, der aber aus elektrisch leitendem Material besteht und mit einer Spannungsquelle verbunden ist. Elektrodenniederhalter bezeichnet einen Niederhalter bekannter Konstruktion, der aus einem elektrisch leitenden Material besteht und ebenfalls mit einer Spannungsquelle verbunden ist. Um die erfindungsgemäßen Verbindungsverfahren zu unterstützen, weisen der Elektrodenstempel und der Elektrodenniederhalter unterschiedliche elektrische Polaritäten auf, sodass über das Schweißhilfsfügeteil zwischen Elektrodenstempel und Elektrodenniederhalter ein Strom fließt und das Schweißhilfsfügeteil erwärmt. Zu diesem Zweck ist es bevorzugt und erforderlich, dass der Elektrodenstempel das aus elektrisch leitendem Material bestehende Schweißhilfsfügeteil kontaktiert, ohne jedoch in elektrischem Kontakt mit dem Elektrodenniederhalter zu stehen. Gleichzeitig kontaktiert der Elektrodenniederhalter das Schweißhilfsfügeteil, sodass ein elektrischer Stromfluss vom Elektrodenstempel zum Elektrodenniederhalter über das Schweißhilfsfügeteil erfolgt. Die dadurch im Schweißhilfsfügeteil erzeugte Wärme unterstützt das Eintreiben des Schweißhilfsfügeteils in das mindestens eine erste Bauteil ohne jedoch das Schweißhilfsfügeteil soweit aufzuweichen, dass ein Eintreiben behindert wird.

Gemäß einer weiteren Alternative vorliegender Erfindung besteht das mindestens eine erste Bauteil aus einem schweißbaren bzw. elektrisch leitenden Material und das Schweißhilfsfügeteil wird über einen Elektrodenstempel eingetrieben und über einen zum Schweißhilfsfügeteil elektrisch isolierten Elektrodenniederhalter geführt.

Während bei dieser Alternative vorliegender Erfindung das Schweißhilfsfügeteil im elektrischen Kontakt mit dem Elektrodenstempel steht, ist der Elektrodenniederhalter in elektrischem Kontakt mit dem aus elektrisch leitendem Material bestehenden mindestens einen ersten Bauteil. Gleichzeitig ist der Elektrodenniederhalter derart elektrisch isoliert, dass kein Kontakt zu dem Schweißhilfsfügeteil besteht. Da der Elektrodenstempel und der Elektrodenniederhalter mit einer Spannungsquelle verbunden sind und eine unterschiedliche Polarität aufweisen, fließt ein elektrischer Strom zwischen dem Elektrodenstempel und dem Elektrodenniederhalter über das Schweißhilfsfügteteil und das mindestens eine erste Bauteil. Dieser Stromfluss führt zu einer Erwärmung des Schweißhilfsfügeteils und des mindestens einen ersten Bauteils vorzugsweise in der Fügezone benachbart zum Schweißhilfsfügeteil. Diese Wärmezufuhrt erleichert bevorzugt das Eintreiben des Schweißhilfsfügeteils in das mindestens eine erste Bauteil.

Bei den oben beschriebenen Alternativen der Verbindungsverfahren besteht das mindestens eine zweite Bauteil aus einem schweißbaren bzw. elektrisch leitenden Material. Da sich das mindestens eine zweite Bauteil an einer Elektrodenmatrize mit einer dem Elektrodenstempel entgegengesetzten elektrischen Polarität abstützt, fließt ein Strom über das Schweißhilfsfügeteil und das zweite Bauteil zwischen Elektrodenstempel und Elektrodenmatrize.

Vorzugsweise wird die Stromstärke zwischen Elektrodenstempel und Elektrodenmatrize derart eingestellt, dass dieser Strom zu einem Verschweißen des Schweißhilfsfügeteils mit dem mindestens einen zweiten Bauteil an der Grenzfläche zwischen Schweißhilfsfügeteil und zweitem Bauteil führt.

Zudem werden mindestens ein erstes Bauteil aus einem schweißbaren oder einem nicht oder schlecht schweißbarem Material und mindestens ein zweites Bauteil aus schweißbarem Material oder mit mindestens einem Bereich aus schweißbarem Material, insbesondere ein Fahrzeug, beschrieben, die über ein in das mindestens eine erste Bauteil gesetztes schweißbares Schweißhilfsfügeteil mit einem mechanisch-thennisch deformierten Spitzenbereich miteinander mittels eines mechanisch-thermischen Setz-Schweiß-Prozesses verbunden worden sind, insbesondere mithilfe der oben beschriebenen Verbindungsverfahren.

### 4. Kurze Beschreibung der begleitenden Zeichnungen

Die vorliegende Erfindung wird unter Bezugnahme auf die begleitende Zeichnung näher erläutert. Es zeigen:
- Figur 1: eine bevorzugte Ausführungsform eines Schweißhilfsfügeteils,
- Figur 2: eine weitere bevorzugte Ausführungsform eines Schweißhilfsfügeteils,
- Figur 3: eine weitere bevorzugte Ausführungsform eines Schweißhilfsfügeteils,
- Figur 4: eine weitere bevorzugte Ausführungsform eines Schweißhilfsfügeteils,
- Figur 5: eine weitere bevorzugte Ausführungsform eines Schweißhilfsfügeteils,
- Figur 6: eine schematische Darstellung einer bevorzugten Ausführungsform einer ersten Phase eines erfindungsgemäßen Verbindungsverfahrens,
- Figur 7: eine schematische Darstellung einer weiteren bevorzugten Ausführungsform der ersten Phase des erfindungsgemäßen Verbindungsverfahrens,
- Figur 8: eine schematische Darstellung einer weiteren bevorzugten Ausführungsform der ersten Phase des erfindungsgemäßen Verbindungsverfahrens,
- Figur 9: eine schematische Darstellung einer bevorzugten Ausführungsform einer zweiten Phase des erfindungsgemäß bevorzugten Verbindungsverfahrens gemäß Figur 6, 7 oder 8,
- Figur 10: eine schematische Darstellung einer bevorzugten Ausführungsform eines erfindungsgemäßen kontinuierlichen Verbindungsverfahrens,
- Figur 11: eine schematische Darstellung einer weiteren bevorzugten Ausführungsform eines erfindungsgemäßen kontinuierlichen Verbindungsverfahrens.

### 5. Detaillierte Beschreibung der bevorzugten Ausführungsformen

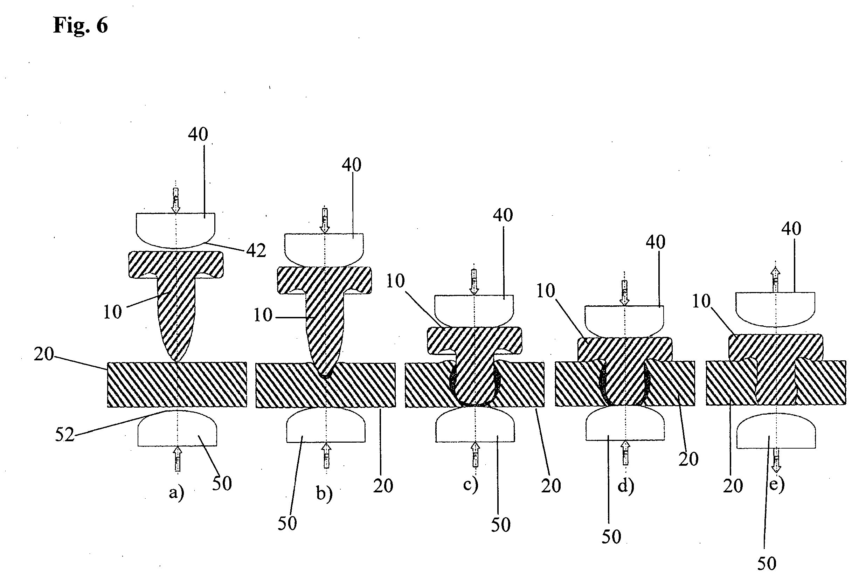

Die vorliegende Erfindung betrifft das Herstellen einer verlässlichen Verbindung mit hoher Lebensdauer zwischen mindestens einem Bauteil 20 aus nicht schweißbarem Material und mindestens einem Bauteil 30 aus schweißbarem Material mittels Schweißen (vgl. Fig. 6-11). Die Materialien der zu verbindenden Bauteile 20 und 30 sind nicht schweißkompatibel zueinander, so dass sie mittelbar über ein bevorzugtes Schweißhilfsfügeteil 10 miteinander verschweißt werden. Zu den schweißbaren Materialien zählen Stähle und hochfeste Stähle, wie beispielsweise 22MnB5 (CEV=0,5), B27 (CEV=0,54), 32MnCrB6 (CEV=0,6), aus denen u. a. Rahmenstrukturen im Fahrzeugbau gefertigt werden. Unter den nicht schweißbaren Materialien werden Materialien verstanden, die sich ohne konstruktive Hilfsmittel nicht oder nur schlecht mit anderen Bauteilen verschweißen lassen. Dazu gehören auch schweißbare Materialien, die jedoch in ihrer Materialkombination zu dem Material eines zu verbindenden Bauteil keine oder nur eine geringe Schweißkompatibilität aufweisen. Das bedeutet, dass die allgemein schweißbaren Materialien sich gerade nicht oder nur schlecht bzw. schwer untereinander verschweißen lassen. Zu diesen Werkstoffen zählen beispielsweise Kunststoffe, faserverstärkte Kunststoffe, Aluminium, Gusseisen oder andere Gusslegierungen sowie Stähle, wie beispielsweise Federstähle mit einem CEV>0,8.

Um das mindestens eine Bauteil 20 aus nicht schweißbarem Material überhaupt mittels Schweißen verbinden zu können, wird es mit dem Schweißhilfsfügeteil 10 versehen. Die hier beschriebenen Verbindungsverfahren und das Schweißhilfsfügeteil 10 sind aber auch auf Bauteile 20 aus schweißbarem oder elektrisch leitfähigem Material anwendbar und von der vorliegenden Erfindung erfasst. Dieses Schweißhilfsfügeteil 10 besteht aus schweißbarem Material und wird in dem mindestens einen Bauteil 20 verankert. Aufgrund seines Materials ist das Schweißhilfsfügeteil 10 nachfolgend mit dem mindestens einen Bauteil 30 aus schweißbarem Material mittels Schweißen verbindbar. Auf diese Weise wird eine verlässliche Verbindung zwischen den Bauteilen 20, 30 mithilfe des Schweißhilfsfügeteils 10 erzeugt.

Es ist ebenfalls bevorzugt, das mindestens eine Bauteil 30 aus nicht schweißbarem Material bereitzustellen. In diesem Fall umfasst das mindestens eine Bauteil 30 mindestens einen Bereich aus schweißbarem Material, der vorzugsweise durch ein bekanntes Schweißhilfsfügeteil oder ein bevorzugtes Schweißhilfsfügeteil 10 gebildet wird (nicht gezeigt). Um eine Verbindung zwischen dem mindestens einen Bauteil 20 und dem mindestens einen Bauteil 30 herzustellen, werden bevorzugt die jeweils in beiden Bauteilen 20, 30 enthaltenen Schweißhilfsfügeteile miteinander verschweißt, vorzugsweise mittels Widerstandsschweißen oder Lichtbogenschweißen. Dieses Verschweißen der beiden Schweißhilfsfügeteile und somit der beiden Bauteile 20, 30 erfolgt derart, dass die Schweißköpfe oder Köpfe der beiden Schweißhilfsfügeteile miteinander in Kontakt gebracht werden und dann verschweißt werden. Alternativ dazu wird ein Kopf eines Schweißhilfsfügeteils mit dem Schweißkopf des anderen Schweißhilfsfügeteils in Kontakt gebracht und dann miteinander verschweißt.

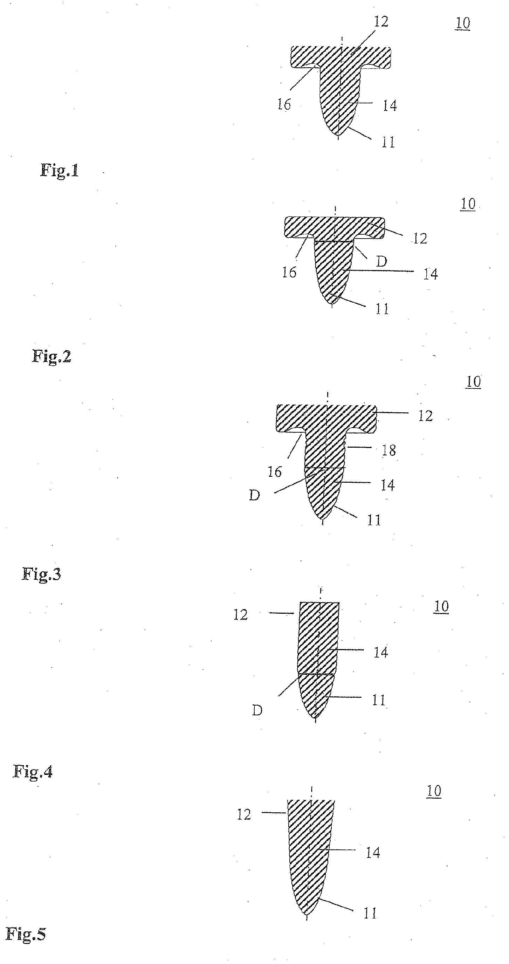

Bevorzugte Ausführungsformen des Schweißhilfsfügeteils 10 zeigen die Fig. 1-5. Das Schweißhilfsfügeteil 10 umfasst einen Kopf 12 und vorzugsweise einen Schaft 14. Zudem umfasst das Schweißhilfsfügeteil 10 einen Spitzenbereich 11, der sich in Längsrichtung des Schweißhilfsfügeteils 10 erstreckt. Der Spitzenbereich erstreckt sich zwischen einer Spitze des Schweißhilfsfügeteils 10 und einem Punkt, an dem der Spitzenbereich seine maximale Dicke D erreicht hat (vgl. Fig. 2 bis 4).

Der Spitzenbereich 11 hat gemäß unterschiedlicher Ausführungsformen unterschiedliche Formen. In einer Seitenansicht ist der Spitzenbereich kegelförmig oder pyramidenförmig oder parabelförmig ausgebildet. Zudem ist es bevorzugt, die zur Längsachse des Spitzenbereichs symmetrische Mantelfläche konvex oder konkav oder polygonal auszubilden. Es versteht sich, dass die oben beschriebenen Ausführungsformen des Spitzenbereichs 11 in Kombination mit dem Kopf 12 oder in Kombination mit dem Kopf 12 und dem Schaft 14 einsetzbar sind.

Der Kopf 12 des Schweißhilfsfügeteils 10 besitzt einen Kopfdurchmesser, der entweder größer oder gleich einem Durchmesser des Schafts 14 oder der maximalen Dicke D des Spitzenbereichs 11 ist. Gemäß den Ausführungsformen der Fig. 1 und 2 ist der Kopfdurchmesser größer als der Schaftdurchmesser oder der maximale Dicke D. Nachdem das Schweißhilfsfügeteil 10 in das mindestens eine Bauteil 20 aus nicht oder schlecht schweißbarem Material gesetzt worden ist, liegt die dem Schaft 14 oder dem Spitzenbereich 11 zugewandte Unterseite des Kopfes 12 auf dem Bauteil 20 auf oder ist von diesem beabstandet. Das bedeutet, dass das Schweißhilfsfügeteil 10 mit einem gewissen Kopfüberstand in das mindestens eine Bauteil 20 gesetzt worden ist.

Die Kopfunterseite des Kopfes 12 umfasst bevorzugt eine ringförmig um den Schaft 14 oder den Spitzenbereich 11 umlaufende Unterkopfnut 16. Diese Unterkopfnut 16 dient der Materialaufnahme für verdrängtes Material aus dem mindestens einen Bauteil 20, dass zum Kopf 12 benachbart ist.

Ebenfalls bevorzugt weist die Kopfunterseite des Kopfes 12 ergänzend zur oder anstelle der Unterkopfnut 16 in radialer Richtung verlaufende Rippen und/oder Vertiefungen bzw. Rillen auf. Die Vertiefungen bzw. Rillen (nicht gezeigt) und die Rippen (nicht gezeigt) definieren Hohlräume, in denen verdrängtes Material aus dem Bauteil 20 aufnehmbar ist. Diese Hohlräume sorgen für eine optimale Auflage des Kopfes 12 auf dem Bauteil 20 trotz Materialverdrängung aus dem Bauteil 20. Zudem bilden diese Hohlräume einen Hinterschnitt gegen ein Verdrehen des Schweißhilfsfügeteils 10 in dem mindestens einen Bauteil 20.

Gemäß weiterer bevorzugter Ausführungsformen des Schweißhilfsfügeteils 10 ist der Kopfdurchmesser des Kopfes 12 gleich dem Schaftdurchmesser des Schafts 14 oder der maximalen Dicke D des Spitzenbereichs, wie es in den Fig. 4 und 5 beispielgebend dargestellt ist.

Für die verschiedenen Ausführungsformen des Schweißhilfsfügeteils 10 ist es zudem bevorzugt, den Schaft 14 zylindrisch (vgl. Fig, 1, 3, 4), kegelig (vgl. Fig. 2 und 5) sowie mit oder ohne äußere Rändelung 18 (vgl. Fig. 3) bereitzustellen.

Gemäß einer weiteren bevorzugten Ausführungsform besitzt eine Spitze des Schafts 14 vorzugsweise eine ogivale Form mit einem Ogivalitätsfaktor aus dem Bereich von 1 bis 20, weiter bevorzugt mit einem Ogivalitätsfaktor aus dem Bereich von 3 - 5. Es ist ebenfalls bevorzugt, dass die Spitze in ihrem Längsschnitt eine Parabelform aufweist oder kegelförmig oder pyramidenförmig ausgestaltet ist. Gemäß einer weiteren bevorzugten Ausgestaltung schließt die Mantelfläche des Spitzenbereichs 11 mit der Längsachse des Schweißhilfsfügeteils 10einen Winkel im Bereich von 5 ° bis 60 ° ein.

Das oben beschriebene Schweißhilfsfügeteil 10 wird zum Verbinden des mindestens einen Bauteils 20 aus nicht schweißbarem Material oder aus schweißbarem bzw. elektrisch leitendem Material mit dem mindestens einen Bauteil 30 aus schweißbarem Material verwendet. Alternativ dazu ist es ebenfalls bevorzugt, das mindestens eine Bauteil 30 aus nicht schweißbarem Material mit einem Schweißhilfsfügeteil bereitzustellen, so dass das mindestens eine Bauteil 20 und das mindestens eine Bauteil 30 über ihre Schweißhilfsfügeteile miteinander verbunden werden.

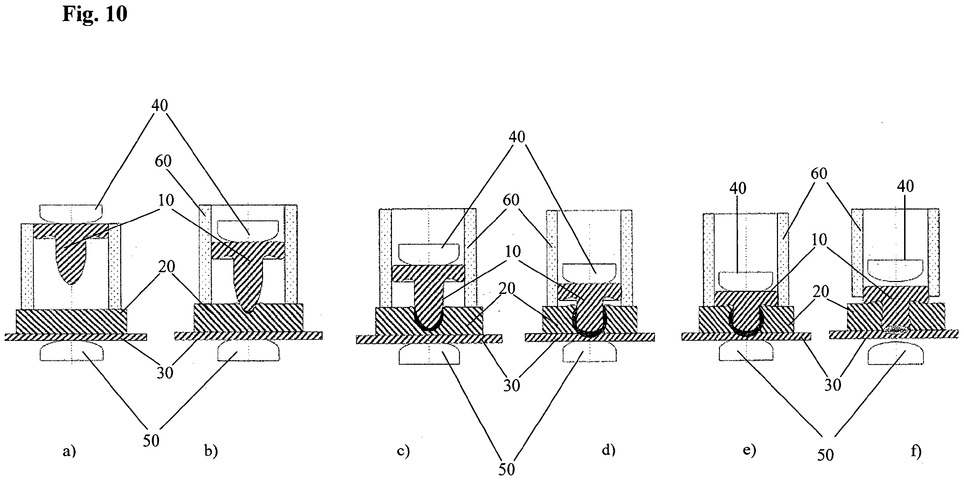

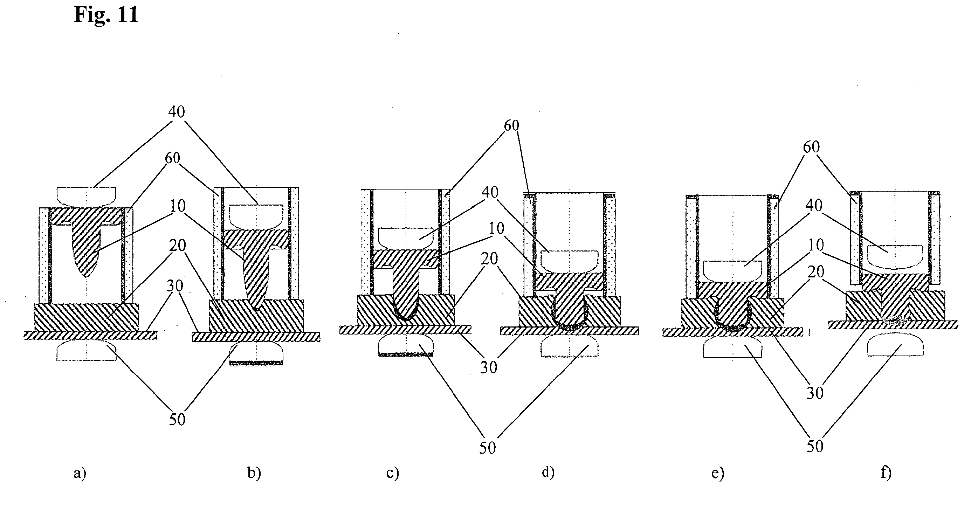

Gemäß einer ersten erfindungsgemäßen Verfahrensalternative setzt sich dieses Verbindungsverfahren aus einem Setzverfahren und einem Schweißverfahren zusammen, die örtlich und zeitlich getrennt voneinander (vgl. Fig. 6-8 und 9) oder aber in einer Abfolge an einem Ort durchführbar sind (vgl. Fig. 10 und 11). Das Setzverfahren umfasst dabei das Setzen bzw. Eintreiben (S1) des Schweißhilfsfügeteils 10 in das mindestens eine erste Bauteil 20, wobei dieses mindestens eine erste Bauteil 20 nicht vorgelocht ist. Das Schweißhilfsfügeteil 10 wird derart in das mindestens eine erste Bauteil 20 eingetrieben, dass kein

Abfallmaterial, wie beispielsweise ein Stanz- oder Abfallbutzen oder dergleichen entsteht. Dies verhindert, dass das Abfallmaterial abgeführt werden muss. Zudem ist dadurch vermieden, dass sich das Abfallmaterial an oder nahe einem Schweißpunkt oder Schweißkopf sammelt und sich während des Schweißens negativ auf die herzustellende Schweißverbindung auswirkt.

Während des Eintreibens (S1) ist die dem Schweißhilfsfügeteil 10 zugeführte Fügeenergie derart einstellbar, dass das Schweißhilfsfügeteil 10 mit (S2) oder ohne Kopfüberstand (S3) eingetrieben wird. Das Eintreiben mit und ohne Kopfüberstand ist für das Schweißhilfsfügeteil 10 mit und ohne Kopf gleichermaßen anwendbar. Der Kopfüberstand gewährleistet vorzugsweise beim späteren Schweißen (siehe unten) die Zufuhr von zusätzlichem Material zur Schweißstelle.

Fig. 6 veranschaulicht schematisch eine erste Phase des erfindungsgemäß bevorzugten Verbindungsverfahrens, die das bevorzugte Eintreiben (S1) des Schweißhilfsfügeteils 10 in ein oder mehrere Bauteile 20 aus nicht schweißbarem oder schweißbarem bzw. elektrisch leitendem Material umfasst. Das Verbindungsverfahren dient dem Verbinden mindestens eines ersten Bauteils 20 mit mindestens einem zweiten Bauteil 30. Das zweite Bauteil 30 besteht aus einem schweißbaren bzw. elektrisch leitenden Material, wie beispielsweise Stahl, Aluminium und ähnliche Werkstoffe, wie sie oben beschrieben worden sind.

Das erste Bauteil 20 ist aus einem nicht schweißbaren bzw. einem nicht elektrisch leitenden Material oder aus einem schweißbaren bzw. elektrisch leitenden Material hergestellt. Im weiteren Text wird der Begriff "schweißbar" mit elektrisch leitend und der Begriff "nicht bzw. schlecht schweißbar" mit nicht bzw. schlecht elektrisch leitend gleichgesetzt. In Abhängigkeit von der Materialwahl der Bauteile 20, 30 ergeben sich unterschiedliche bevorzugte Alternativen der Verbindungsverfahren.

Wenn in vorliegender Beschreibung von einem Bauteil 20 und einem Bauteil 30 gesprochen wird, dann wird darunter gleichzeitig die Möglichkeit einer Mehrzahl von Bauteilen 20 und Bauteilen 30 verstanden.

Die unterschiedlichen im Folgenden beschriebenen Ausführungsformen des erfindungsgemäßen Verbindungsverfahrens benutzen allgemein eine kombinierte mechanische und thermische Last, um das Schweißhilfsfügeteil 10 in das mindestens eine erste Bauteil 20 einzutreiben. Die mechanische Last wird durch einen Stempel, vorzugsweise einen Elektrodenstempel 40, auf das Schweißhilfsfügeteil 10 aufgebracht, wie es aus Setzverfahren für Stanzniete allgemein bekannt ist. Zusätzlich zur mechanischen Last wird das Schweißhilfsfügeteil 10 während des Eintreibens in das mindestens eine erste Bauteil 20 erwärmt. Diese thermische Last unterstützt oder erleichtert eine Verformbarkeit des Schweißhilfsfügeteils 10 und/oder des mindestens ersten Bauteils 20, ohne seine Fügeeigenschaften zu verschlechtern. Des Weiteren gibt das Schweißhilfsfügeteil 10 bevorzugt Wärme an die benachbarten Bereiche des Bauteils 20 ab, wodurch das Eintreiben des Schweißhilfsfügeteils 10 in das Bauteil 20 erleichtert wird. Die thermische Energie oder Wärme im Schweißhilfsfügeteils 10 wird mit Hilfe eines elektrischen Stromflusses im Schweißhilfsfügeteil 10 erzeugt.

Gemäß unterschiedlicher Verfahrensalternativen wird dieser Stromfluss allein durch das Schweißhilfsfügeteil 10 oder durch das Schweißhilfsfügeteil 10 und das Bauteil 20 geleitet, um diese zu erwärmen. In Abhängigkeit von der Stromstärke und der Dauer des Stromflusses sind das Schweißhilfsfügeteil 10 und/oder das Bauteil 20 gezielt erwärmbar, wobei auch unterschiedliche Dimensionen und Materialzusammensetzungen von Bauteil 20 und Schweißhilfsfügeteil 10 beachtet werden können.

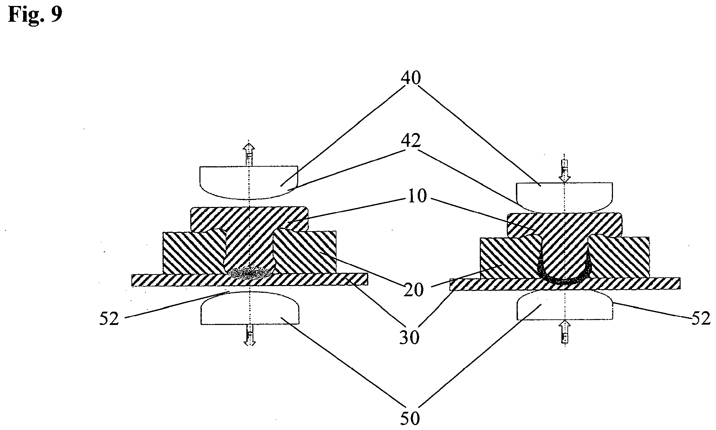

Die Figuren 6 und 9 veranschaulichen zwei Phasen einer bevorzugten Ausführungsform eines erfindungsgemäßen Verbindungsverfahrens, bei dem in einer ersten Phase zunächst das Schweißhilfsfügeteil 10 unter kombinierter mechanischer und thermischer Belastung in das Bauteil 20 eingetrieben wird. Die mechanische Last bringt der Elektrodenstempel 40 in Form einer Druckkraft auf das Schweißhilfsfügeteil 10 auf. Der Elektrodenstempel 40 besitzt die Funktionalität von Stempeln bekannter Setzgeräte. Zusätzlich dazu ist eine mit dem Schweißhilfsfügeteil 10 in Kontakt stehende Stempelfläche 42 elektrisch leitend vorgesehen. Da der Elektrodenstempel 40 mit einer Spannungsquelle (nicht gezeigt) bestimmter elektrischer Polarität verbunden ist, überträgt sich diese elektrische Polarität und das Potential der Spannungsquelle auf den Elektrodenstempel 40 und über die Stempelfläche 42 auf das elektrisch leitende Schweißhilfsfügeteil 10.

Gemäß der in Figur 6 dargestellten bevorzugten Ausführungsform besteht das Bauteil 20 aus einem elektrisch leitfähigen Material und stützt sich an einer Elektrodenmatrize 50 ab. Die Elektrodenmatrize 50 hat die gleichen Eigenschaften und Funktionen wie bekannte Matrizen von Setzgeräten. Zusätzlich dazu ist eine mit dem Bauteil 20 in Kontakt stehende Matrizenfläche 52 elektrisch leitend vorgesehen. Da die Elektrodenmatrize 50 mit einer Spannungsquelle (nicht gezeigt) bestimmter elektrischer Polarität und bestimmten elektrischen Potentials verbunden ist, überträgt sich die elektrische Polarität und das elektrische Potential der Elektrodenmatrize 50 über die Matrizenfläche 52 auf das elektrisch leitende Bauteil 20.

Um eine thermische Belastung zumindest im Schweißhilfsfügeteil 10 zu erzeugen - also das Schweißhilfsfügeteil 10 zu erwärmen - wird ein Stromfluss im Schweißhilfsfügeteil 10 erzeugt. Dazu werden der Elektrodenstempel 40 und die Elektrodenmatrize 50 mit einer elektrischen Spannung bzw. Stromquelle unterschiedlicher elektrischer Polarität verbunden. Sobald die Stempelfläche 42 das Schweißhilfsfügeteil 10 und die Matrizenfläche 52 das elektrisch leitende Bauteil 20 berühren, fließt ein elektrischer Strom durch das Schweißhilfsfügeteil 10 und das Bauteil 20. Aufgrund der Stärke des Stromflusses wird das Schweißhilfsfügeteil 10 und vorzugsweise auch das Bauteil 20 derart erwärmt, dass das Eintreiben des Schweißhilfsfügeteils 10 in das Bauteil 20 unterstützt und erleichtert wird.

Gemäß den sequentiellen Darstellungen in den Figuren 6a - d wird das Schweißhilfsfügeteil 10 durch die mechanische Last zunehmend in das Bauteil 20 eingetrieben. Die zugeführte thermische Energie unterstützt eine Verformung des Schweißhilfsfügeteils 10, so dass sich der Schaft des Schweißhilfsfügeteils 10 vorzugsweise radial aufweitet. Da weiterhin bevorzugt auch ein Teil der Wärme des Schweißhilfsfügeteils 10 an das Bauteil 20 abgegeben wird, unterstützt dies eine Materialverdrängung entgegen der Fügerichtung des Schweißhilfsfügeteils 10, wie in Figur 6c, d angedeutet ist. Auf diese Weise wird der Materialfluss im Bauteil 20 entgegen der Fügerichtung des Schweißhilfsfügeteils 10 gefördert, so dass sich vorzugsweise eine Unter-Kopf-Ringnut des Schweißhilfsfügeteils 10 mit einer Materialwulst aus verdrängtem Material füllt.

Des Weiteren trifft die Spitze des Schweißhilfsfügeteils 10 an einer Austrittsstelle aus dem Bauteil 20 auf die Elektrodenmatrize 50 und wird dort deformiert und im Speziellen gestaucht. Das Stauchen führt zu einer lateralen Aufweitung des Schweißhilfsfügeteils 10, so dass sich an der Austrittsstelle aus dem Bauteil 20 ein Schweißkopf 70 des Schweißhilfsfügeteils 10 ausbildet. Sobald der Kopf des Schweißhilfsfügeteils 10 auf dem Bauteil 20 aufliegt oder ein definierter Kopfüberstand bezogen auf das Bauteil 20 erzeugt worden ist, werden der Elektrodenstempel 40 und die Elektronenmatrize 50 vom Schweißhilfsfügeteil 10 entfernt. Damit fließt auch kein Strom mehr durch das Schweißhilfsfügeteil 10, und das Schweißhilfsfügeteil sowie das Bauteil 20 kühlen ab. Es ist ebenfalls bevorzugt, den Elektrodenstempel 40 und/oder die Elektrodenmatrize 50 bereits früher elektrisch abzuschalten, damit keine Wärme mehr im Schweißhilfsfügeteil 10 erzeugt wird. Das Abschalten erfolgt bevorzugt, sobald das Schweißhilfsfügeteil 10 die Elektrodenmatrize 50 berührt.

Während des Eintreibens des Schweißhilfsfügeteils wurde erkannt, dass möglicherweise Material des Bauteils 20 vor dem späteren Schweißkopf 20 hergeschoben wird. Um zu vermeiden, dass das verdrängte Material des Bauteils 20 das spätere Schweißen und somit den Kontakt zwischen Schweißkopf 70 und dem weiteren Bauteil 30 behindert, werden vorzugsweise diese Materialreste (nicht gezeigt) am Schweißkopf 70 weggebrannt oder weggesprengt. Diese Reinigung des Schweißkopfes 70 erfolgt mit einem reinigenden Stromimpuls, der einen Stromfluss ausreichender Stromstärke durch das Schweißhilfsfügeteil 10 hervorruft. Die Stromstärke dieses Stromflusses muss dabei so groß sein, dass die Materialreste am Schweißkopf 70 der thermischen Belastung durch diesen Stromfluss nicht widerstehen können. Es ist der Weiteren denkbar, diese Materialreste am Schweißkopf 70 durch eine hochfrequente Spannung zu entfernen. Es versteht sich, dass derart reinigende Stromimpulse nur dann im Schweißhilfsfügeteil 10 erzeugt werden können, wenn ein elektrischer Kontakt zwischen Elektrodenstempel 40, Schweißhilfsfügeteil 10 und Elektrodenmatrize 50 vorliegt (vgl. Figur 6d).

Der bereits oben erwähnte Schweißkopf 70 stellt eine freie Schweißfläche 72 bereit, um für ein späteres Schweißverfahren das weitere Bauteil 30 zu kontaktieren (siehe unten).

Aus obigem folgt, dass das Schweißhilfsfügeteil 10 mit Hilfe einer kombinierten mechanischen und thermischen Belastung eingetrieben wird, wobei gerade die über die zugeführte elektrische Energie erzeugte Wärme im Schweißhilfsfügeteil 10 und bevorzugt im Bauteil 20 das Eintreiben unterstützt und erleichtert. Auf diese Weise werden gemäß einer weiteren bevorzugten Ausführungsform Eintreibgeschwindigkeiten des Schweißhilfsfügeteils 10 von > 0,5 m/s bis 5 m/s und bevorzugt von 1 m/s bis 4 m/s erzielt, die den gesamten Verbindungsprozess in effektiver Weise verkürzen.

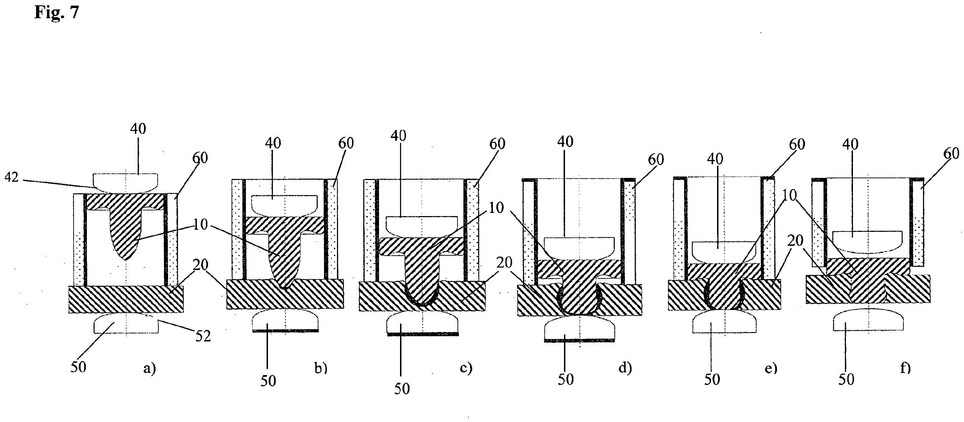

Gemäß einer weiteren bevorzugten Ausführungsform der ersten Phase des oben beschriebenen Verbindungsverfahrens wird ein Elektrodenniederhalter 60 zum Festhalten des Bauteils 20, zum gleichzeitigen elektrischen Kontaktieren des Bauteils 20 und zum Eintreiben des Schweißhilfsfügeteils 10 verwendet (vgl. Fig. 7). Der Elektrodenniederhalter 60 ist mit einer elektrischen Spannungs- bzw. Stromquelle verbunden (nicht gezeigt). Zudem ist der Elektrodenniederhalter 60 an seiner radialen Innenseite 62 zum Schweißhilfsfügeteil 10 elektrisch isoliert. Vorzugsweise weist der Elektrodenniederhalter 60 die gleiche elektrische Polarität wie die Elektrodenmatrize 50 und die entgegengesetzte elektrische Polarität wie der Elektrodenstempel 40 auf.

Des Weiteren ist es bevorzugt und auch in den oben beschriebenen Ausführungsformen anwendbar, dass der Elektrodenniederhalter 60 aus einem elektrisch gut leitenden Material besteht. Dies gewährleistet, dass die im Elektrodenniederhalter 60 fließenden Ströme begrenzt sind und für eine geringe Wärmeentwicklung sorgen. Da eine Erwärmung des Elektrodenniederhalters 60 zu einer Beschädigung des Bauteils 20 führen könnte, ist es ebenfalls bevorzugt, den Elektrodenniederhalter 60 zu kühlen. Dies verhindert vorzugsweise auch ein Einpressen des Elektrodenniederhalters 60 in das Bauteil 20.

Der Elektrodenstempel 40 treibt das Schweißhilfsfügeteil 10 in Richtung des Bauteils 20, das aus einem elektrisch leitenden Material besteht. Solange das Schweißhilfsfügeteil 10 noch nicht auf dem Bauteil 20 aufsetzt, fließt kein elektrischer Strom durch das Schweißhilfsfügeteil 10 (vgl. Figur 7a). Gemäß einer bevorzugten Ausführungsform sind der Elektrodenniederhalter 60 und die Elektrodenmatrize 50 mit entgegengesetzter elektrischer Polarität mit dem Bauteil 20 verbunden, so dass ein aufwärmender elektrischer Strom durch das Bauteil 20 fließt. Dieser Stromfluss erwärmt das Schweißhilfsfügeteil 10 sowie das Bauteil 20 innerhalb einer Fügezone unterhalb des Elektrodenstempels 40.

Zum Zeitpunkt des Aufsetzens des Schweißhilfsfügeteils 10 auf dem Bauteil 20 ist die Elektrodenmatrize 50 elektrisch isoliert zum Bauteil 20 oder elektrisch abgeschaltet, was durch den unteren schwarzen Strich an der Elektrodenmatrize 50 verdeutlicht ist. Da der Elektrodenstempel 40 und der Elektrodenniederhalter 60 unterschiedliche elektrische Polarität aufweisen, fließt ein Strom über das Schweißhilfsfügeteil 10 und das Bauteil 20 zwischen dem Elektrodenniederhalter 60 und dem Elektrodenstempel 40. Dieser Stromfluss erwärmt das Schweißhilfsfügeteil 10 sowie das Bauteil 20 innerhalb einer Fügezone unterhalb des Elektrodenstempels 40.

Während der Elektrodenniederhalter 60 einerseits vorzugsweise ein Hochsteigen verdrängten Materials des Bauteils 20 verhindert, ermöglicht er eine Erwärmung des Bauteils 20 in der Fügezone. Diese Erwärmung hat eine größere laterale Ausdehnung als in der Ausführungsform gemäß Fig. 6, weil der Strom aus dem Schaft des Schweißhilfsfügeteils 10 zum Elektrodenniederhalter 60 fließt und dabei das Bauteil 20 erwärmt.

Sobald das Schweißhilfsfügeteil 10 die Elektrodenmatrize 50 kontaktiert, wird die Elektrodenmatrize 50 elektrisch zugeschaltet (vgl. Figuren 7c, d). Gleichzeitig wird der Elektrodenniederhalter 60 elektrisch abgeschaltet, was durch die schwarzen Striche an der Oberseite des Elektrodenniederhalters 60 veranschaulicht ist. Es ist natürlich ebenfalls bevorzugt, den Elektrodenniederhalter 60 in Ergänzung zur Elektrodenmatrize 50 zugeschaltet zu lassen, um den Stromfluss zu verstärken und/oder im Bauteil 20 zu verteilen.

In den Eintreibstadien gemäß den Figuren 7d und e erfolgt in gleicher Weise, wie es oben in Bezug auf Figur 6 beschrieben worden ist, ein Erwärmen und Stauchen des Schweißhilfsfügeteils 10. Auf diese Weise wird der gewünschte Schweißkopf 70 mit der später genutzten Schweißfläche 72 hergestellt. Durch das Stauchen und laterale Aufweiten des Schweißhilfsfügeteils 10 verspannt sich dieses vorzugsweise im Bauteil 20, was die Stabilität der herzustellenden Verbindung unterstützt.

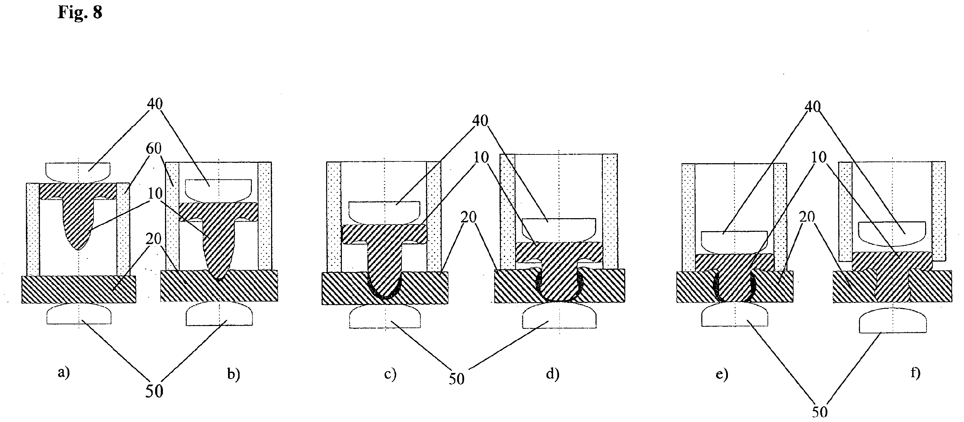

Figur 8 veranschaulicht schematisch das bevorzugte Eintreiben des Schweißhilfsfügeteils 10 in das Bauteil 20 bestehend aus elektrisch nicht leitendem Material. Während die mechanische Last über den Elektrodenstempel 40 auf das Schweißhilfsfügeteil 10 aufgebracht wird, wird das Schweißhilfsfügeteil 10 vorzugsweise vor oder während des Eintreibens in das Bauteil 20 durch elektrischen Stromfluss erwärmt. Zu diesem Zweck weisen der Elektrodenstempel 40 und der Elektrodenniederhalter 60 unterschiedliche elektrische Polarität auf, wobei sie über das elektrisch leitende Schweißhilfsfügeteil 10 miteinander verbunden sind. Der Stromfluss über das Schweißhilfsfügeteil 10 zwischen Elektrodenstempel 40 und Elektrodenniederhalter 60 erwärmt das Schweißhilfsfügeteil 10 (vgl. Fig. 8a) und vorzugsweise das Bauteil 20 während des Eintreibens des Schweißhilfsfügeteils 10 in das Bauteil 20.

Während des Eintreibens des Schweißhilfsfügeteils 10 in das Bauteil 20 wird das Schweißhilfsfügeteil 10 deformiert, wie oben bereits diskutiert worden ist. Dieses Deformieren umfasst ein beliebiges Verformen, wie beispielsweise Verzerren oder Abbiegen, des Schweißhilfsfügeteils 10 innerhalb des Bauteils 20. Zudem umfasst das Deformieren bevorzugt das Stauchen an der Elektrodenmatrize 50 oder an einem weiteren Bauteil 30, was zu einer lateralen Aufweitung des Schweißhilfsfügeteils 10 quer zu seiner Längsachse führt. Das Deformieren umfasst auch ein Fließen des Schweißhilfsfügeteil 10 innerhalb des Bauteils 20 und/oder durch die Wärmezufuhr und/oder zum Abbauen von mechanischen Spannungen im Bauteil 20. Dieses Deformieren tritt bei allen Ausführungsformen vorliegender Erfindung auf, auch wenn nicht explizit daraufhingewiesen wird.

Sobald das Schweißhilfsfügeteil 10 auf die Elektrodenmatrize 50 trifft, wird das Schweißhilfsfügeteil 10 gestaucht. Auf diese Weise wird der Schweißkopf 70 mit Schweißfläche 72 erzeugt (vgl. Fig. 8d). Vorzugsweise wird das Eintreiben und Stauchen des Schweißhilfsfügeteils 10 fortgesetzt, bis der Kopf des Schweißhilfsfügeteils 10 auf dem Bauteil 20 aufliegt. Nachfolgend kühlt das Bauteil 20 mit Schweißhilfsfügeteil 10 ab und der Elektrodenstempel 40, der Elektrodenniederhalter 60 und die Elektrodenmatrize 50 werden entfernt.

Aus den oben beschriebenen bevorzugten Ausführungsformen des thermisch-mechanischen Setzvorgangs gemäß den Figuren 6, 7 und 8 geht das Bauteil 20 mit Schweißhilfsfügeteil 10 hervor, dass nun mit einem weiteren Bauteil 30 verschweißt werden kann. Dazu wird gemäß Figur 9, das Bauteil 20 mit Schweißhilfsfügeteil 10 auf dem Bauteil 30 positioniert, welches aus schweißbarem Material besteht. Nun werden über den Elektrodenstempel 40 und die Elektrodenmatrize 50 die beiden Bauteile 20, 30 aneinander gedrückt, um einen ausreichenden elektrischen Kontakt zwischen der Schweißfläche 72 des Schweißhilfsfügeteils 10 und dem Bauteil 30 herzustellen. Anschließend werden der Elektrodenstempel 40 und die Elektrodenmatrize 50 mit unterschiedlicher elektrischer Polarität zugeschaltet, sodass ein ausreichender Schweißstrom über das Schweißhilfsfügeteil 10 und das Bauteil 30 zwischen Elektrodenstempel 40 und Elektrodenmatrize 50 fließt. Im Bereich des Schweißkopfes 70 mit Schweißfläche 72 findet aufgrund des Stromflusses und der damit verbundenen Erwärmung an der Grenzfläche zwischen Schweißfläche 72 und Bauteil 30 eine Gefügeumwandlung statt, die das Schweißhilfsfügeteil 10 mit dem Bauteil 30 verbindet. Nachdem der Stromfluss abgeschaltet worden ist, kühlt die hergestellte Verbindung aus. Es ist bevorzugt, während des hier genutzten Widerstandsschweißens noch zusätzlich elektrische Energie bzw. Wärme zuzuführen, indem der elektrische Niederhalter 60 auf ein elektrisch leitendes Bauteil 20 aufgesetzt wird.

Wie man anhand der bereits oben beschriebenen Ausführungsformen erkennen kann, zeichnet sich vorliegende Erfindung dadurch aus, dass die mechanische und die thermische Last des Schweißhilfsfügeteils 10 gezielt variiert wird. So wird bevorzugt die thermische Last, also die Wärme, im Schweißhilfsfügeteil 10 und bevorzugt im Bauteil 20 und/oder Bauteil 30 in Abstimmung mit der aufgebrachten Kraft durch den Elektrodenstempel 40 verändert. Bevorzugt ist bei einer höheren thermischen Belastung eine geringere Fügekraft des Elektrodenstempels 40 erforderlich. Zudem wird vorzugsweise die Fügekraft des Elektrodenstempels 40 erhöht, wenn eine Absenkung der Wärme im Schweißhilfsfügeteil 10 und/oder im Bauteil 20/30 nötig sein sollte. Des Weiteren können auch gleichzeitig mechanische und thermische Belastung erhöht oder erniedrigt werden. Gerade die gezielte Wärmeerzeugung im Schweißhilfsfügeteil 10 und/oder in den Bauteilen 20/30 wird vorzugsweise durch die elektrischen Umschaltmöglichkeiten zwischen den Elektroden Elektrodenstempel 40, Elektrodenmatrize 50 und Elektrodenniederhalter 60 gewährleistet. Dabei ist es möglich, die einzelnen Elektroden gezielt zu- und abzuschalten, ihre

Polarität zu ändern und auch die an ihnen anliegenden elektrischen Spannungen zu variieren. Auf diese Weise wird bevorzugt der Stromfluss gezielt geleitet: a) vom Elektrodenstempel 40 über das Schweißhilfsfügeteil 10 und das Bauteil 20 in die Elektrodenmatrize 50 (vgl. Figur 6a) oder b) vom Elektrodenstempel 40 über das Schweißhilfsfügeteil 10 und das Bauteil 20 in den Elektrodenniederhalter 60 (vgl. Figur 7d) oder c) vom Elektrodenniederhalter 60 durch das Bauteil 20 in die Elektrodenmatrize 50 (vgl. Figur 7a) oder d) vom Elektrodenstempel 40 über das Schweißhilfsfügeteil 10 und das Bauteil 20 sowie vom Elektrodenniederhalter 60 über das Bauteil 20 in die Elektrodenmatrize 50 oder e) vom Elektrodenstempel 40 über das Schweißhilfsfügeteil 10 in den Elektrodenniederhalter 60 (vgl. Figur 8d).

Innerhalb desselben Verbindungsverfahrens, egal welcher Ausführungsform vorliegender Erfindung, wird bevorzugt zwischen den oben beschriebenen Anschlusskonfigurationen umgeschaltet, um ausgewählte Bereiche der miteinander zu verbindenden Bauteile 20, 30 sowie des Schweißhilfsfügeteils 10 gezielt thermisch zu belasten.

Die vorliegende Erfindung umfasst zudem einen kontinuierlich ablaufenden mechanisch-thermischen Setz-Schweiß-Prozess, bei dem die Bauteile 20, 30 mit Hilfe des Schweißhilfsfügeteils 10 in einem kontinuierlich ablaufenden Verbindungsverfahren miteinander verbunden werden. Zwei bevorzugte Ausführungsformen dieses kontinuierlichen Verbindungsverfahrens sind in den Figuren 10 und 11 schematisch veranschaulicht. Die Ausführungsform der Figur 10 setzt sich zusammen aus den Verfahrensalternativen gemäß den Figuren 8 und 9, die nun zusammenhängend ablaufen. Die Ausführungsform der Figur 11 setzt sich zusammen aus den Verfahrensalternativen gemäß den Figuren 7 und 9, die nun zusammenhängend ablaufen.

Da in den Ausführungsformen der Figuren 10 und 11 das Bauteil 20 auf dem elektrisch leitenden Bauteil 30 positioniert wird, bevor das Eintreiben des Schweißhilfsfügeteils 10 in das Bauteil 20 beginnt, ist die Beschreibung der bevorzugten Ausführungsformen der Figuren 8 und 7 analog auf die Ausführungsformen der Figuren 10 und 11 übertragbar. Das elektrisch leitende Bauteil 30 stellt in gleicher Weise wie zuvor die Elektrodenmatrize 50, eine elektrisch leitende Fläche bereit, die die jeweilige elektrische Polarität der Elektrodenmatrize 50 aufweist.

Im Unterschied zu den Ausführungsformen der Fig. 8 und 7 wird anschließend an das Eintreiben des Schweißhilfsfügeteils 10 in das Bauteil 20 und das Ausformen des Schweißkopfes 70 mit Schweißfläche 72 die Schweißverbindung zwischen Schweißhilfsfügeteil 10 und Bauteil 30 hergestellt. Vorzugsweise gehen das Ausformen des Schweißkopfes 70 mit Schweißfläche 72 und das Schweißen ineinander über, so dass das kontinuierliche Verbindungsverfahren zeiteffizienter abläuft. Des Weiteren ist es nicht erforderlich, die Anordnung aus Schweißhilfsfügeteil 10 und Bauteil 20 abzukühlen und von dem Elektrodenstempel 40 und der Elektrodenmatrize 50 zu entfernen. Zudem wirkt sich vorteilhaft aus, dass durch die kombinierten mechanischen und thermischen Lasten die bereits oben erwähnten Eintreibgeschwindigkeiten des Schweißhilfsfügeteils 10 erzielt werden können.

## Patentansprüche

1. Verbindungsverfahren mit Hilfe eines Schweißhilfsfügeteils (10) für mindestens ein erstes Bauteil (20; 22) ohne Vorlochen des mindestens einen ersten Bauteils (20; 22), das aus einem nicht schweißbarem bzw. elektrisch nicht leitenden Material besteht, mit mindestens einem zweiten Bauteil (30) aus schweißbarem bzw. elektrisch leitendem Material oder mit einem Abschnitt aus schweißbarem bzw. elektrisch leitendem Material, das die folgenden Schritte aufweist:
a. Eintreiben des Schweißhilfsfügeteils (10) über einen Elektrodenstempel (40) in das mindestens eine erste Bauteil (20) mit einer kombinierten mechanisch-thermischen Belastung zumindest des Schweißhilfsfügeteils (10), wobei das Schweißhilfsfügeteil (10) über einen Elektrodenniederhalter (60) geführt wird und der Elektrodenstempel (40) und der Elektrodenniederhalter (60) unterschiedliche elektrische Polarität aufweisen, so dass über das Schweißhilfsfügeteil (10) zwischen Elektrodenstempel (40) und Elektrodenniederhalter (60) ein Strom fließt, der zumindest das Schweißhilfsfügeteil (10) erwärmt,
b. Deformieren des Schweißhilfsfügeteils (10) unter kombinierter mechanisch-thermischer Belastung am mindestens einen zweiten Bauteil (30) und
c. Verschweißen des Schweißhilfsfügeteils (10) mit dem mindestens einen zweiten Bauteil, so dass das mindestens eine erste Bauteil (20) und das mindestens eine zweite Bauteil (30) über das Schweißhilfsfügeteil (10) miteinander verbunden sind, wobei
d. das Verbindungsverfahren kontinuierlich in einem mechanisch-thermischen Setz-Schweiß-Prozess stattfindet.

2. Verbindungsverfahren mit Hilfe eines elektrisch leitenden bzw. aus einem schweißbaren Material bestehenden Schweißhilfsfügeteils (10), um mindestens ein erstes Bauteil (20; 22) aus schweißbarem oder nicht schweißbarem bzw. elektrisch leitendem oder nichtleitendem Material ohne Vorlochen des mindestens einen ersten Bauteils (20; 22) mit mindestens einem zweiten Bauteil (30) aus schweißbarem bzw. elektrisch leitendem Material oder mit einem Abschnitt aus schweißbarem bzw. elektrisch leitendem Material zu verbinden, wobei das Verbindungsverfahren die folgenden Schritte aufweist:
a. Eintreiben des Schweißhilfsfügeteils (10) in das mindestens eine erste Bauteil (20; 22) mit einer kombinierten mechanisch-thermischen Belastung zumindest des Schweißhilfsfügeteils (10), wobei kein Abfallmaterial von dem mindestens einen ersten Bauteil (20; 22) getrennt wird,
b. Deformieren des Schweißhilfsfügeteils (10) unter kombinierter mechanisch-thermischer Belastung an einer Matrize (50) an einer Austrittsstelle aus dem ersten Bauteil (20; 22), so dass ein Schweißkopf (70) des Schweißhilfsfügeteils (10) entsteht,
c. Positionieren des ersten Bauteils mit Schweißhilfsfügeteil (10) und Schweißkopf (70) auf dem mindestens einen zweiten Bauteil (30), so dass der Schweißkopf (70) am mindestens einen zweiten Bauteil (30) anliegt, und
d. Verschweißen des Schweißkopfes (70) des Schweißhilfsfügeteils (10) mit dem mindestens einen zweiten Bauteil (30), so dass das mindestens eine erste Bauteil (20) und das mindestens eine zweite Bauteil (30) über das Schweißhilfsfügeteil (10) miteinander verbunden sind.

3. Verbindungsverfahren mit Hilfe eines Schweißhilfsfügeteils (10) für mindestens ein erstes Bauteil (20; 22) ohne Vorlochen des mindestens einen ersten Bauteils (20; 22), das aus einem schweißbaren bzw. elektrisch leitenden Material besteht, mit mindestens einem zweiten Bauteil (30) aus schweißbarem bzw. elektrisch leitendem Material oder mit einem Abschnitt aus schweißbarem bzw. elektrisch leitendem Material, das die folgenden Schritte aufweist:
a. Führen des Schweißhilfsfügeteils (10) über einen zum Schweißhilfsfügeteil (10) elektrisch isolierten Elektrodenniederhalter (60) und Eintreiben des Schweißhilfsfügeteils (10) über einen Elektrodenstempel (40) in das mindestens eine erste Bauteil (20; 22) mit einer kombinierten mechanisch-thermischen Belastung zumindest des Schweißhilfsfügeteils (10), wobei eine abstützende Elektrodenmatrize (50) elektrisch isoliert ist und der Elektrodenstempel (40) und der Elektrodenniederhalter (60) unterschiedliche Polarität aufweisen, so dass über das Schweißhilfsfügeteil (10) und das erste Bauteil (20; 22) zwischen Elektrodenstempel (40) und Elektrodenniederhalter (60) ein Strom fließt und zumindest das Schweißhilfsfügeteil (10) erwärmt,
b. Deformieren des Schweißhilfsfügeteils (10) unter kombinierter mechanisch-thermischer Belastung am mindestens einen zweiten Bauteil (30) und
c. Verschweißen des Schweißhilfsfügeteils (10) mit dem mindestens einen zweiten Bauteil (30), so dass das mindestens eine erste Bauteil (20) und das mindestens eine zweite Bauteil (30) über das Schweißhilfsfügeteil (10) miteinander verbunden sind, wobei
d. das Verbindungsverfahren kontinuierlich in einem mechanisch-thermischen Setz-Schweiß-Prozess stattfindet.

4. Verbindungsverfahren gemäß Anspruch 1 oder 2, bei dem das mindestens eine erste Bauteil (20; 22) und das mindestens eine zweite Bauteil (30) mittels Widerstandsbolzenschweißen oder Widerstandspunktschweißen verschweißt werden.

5. Verbindungsverfahren gemäß einem der vorhergehenden Ansprüche, wobei das Schweißhilfsfügeteil (10) ein Bolzen mit einem Kopf (12) oder zumindest einem Spitzenbereich (11) ist, bei dem ein Kopfdurchmesser größer als eine maximale Dicke des Spitzenbereichs (11) ist, und wobei der Bolzen nach Abschluss des Verbindungsverfahrens mit einer dem mindestens einen ersten Bauteil (20; 22) zugewandten Kopfunterseite auf dem mindestens einen ersten Bauteil (20; 22) aufliegt oder von diesem beabstandet ist (S2; S3).

6. Verbindungsverfahren gemäß einem der vorhergehenden Ansprüche 1, 2 und 4, wobei das Schweißhilfsfügeteil (10) ein Bolzen mit einem Kopf (12) ist, bei dem ein Kopfdurchmesser eine maximale Dicke des Spitzenbereichs (11) nicht übersteigt, und wobei der Bolzen mit dem Kopf (12) nach Abschluss des Verbindungsverfahrens bündig mit dem mindestens einen ersten Bauteil (20; 22) abschließt oder von diesem (20; 22) übersteht.

7. Verbindungsverfahren gemäß Anspruch 5, in dem der Kopf (12) des Schweißhilfsfügeteils (10) an einer dem Spitzenbereich (11) zugewandten Seite eine Ringnut (16) zur Aufnahme einer Materialverformung eines zum Kopf benachbarten Bauteils (20; 22) aufweist.

8. Verbindungsverfahren gemäß Anspruch 5, in dem der Spitzenbereich (11) eine ogivale Spitze mit einem Ogivalitätsfaktor aus einem Bereich von 1 bis 10 oder eine kegelförmige, eine runde, eine parabelförmige oder eine pyramidenförmige Ausgestaltung aufweist.

9. Verbindungsverfahren gemäß einem der vorhergehenden Ansprüche 1 und 4 bis 8 in Kombination mit Anspruch 1, wobei während des Deformierens ein Spitzenbereich des Schweißhilfsfügeteils (10) zumindest teilweise in einen Schweißkopf (70) umgeformt wird.

10. Verbindungsverfahren gemäß einem der vorhergehenden Ansprüche 1, 2 und 4 bis 9, bei dem das Eintreiben (S4) mithilfe der mechanisch-thermischen Belastung das Schweißhilfsfügeteil (10) auf eine Geschwindigkeit in einem Bereich von > 0,5 m/s bis 5 m/s beschleunigt, vorzugsweise 1 m/s bis 4 m/s.

11. Verbindungsverfahren gemäß einem der vorhergehenden Ansprüche 1 und 4 bis 10 in Kombination mit Anspruch 1 aufweisend:
Stauchen (S5; S8) des Schweißhilfsfügeteils (10) an dem mindestens einen zweiten
Bauteil (30) aus schweißbarem bzw. elektrisch leitendem Material, das an der Austrittsstelle des Schweißhilfsfügeteils (10) aus dem mindestens einen ersten Bauteil (20; 22) angeordnet ist.

12. Verbindungsverfahren gemäß einem der vorhergehenden Ansprüche 2 und 4 bis 10 in Kombination mit Anspruch 2 aufweisend:
Stauchen (S5; S8) des Schweißhilfsfügeteils (10) an der Matrize (50), die an der Austrittsstelle des Schweißhilfsfügeteils (10) aus dem mindestens einen ersten Bauteil (20; 22) angeordnet ist.

13. Verbindungsverfahren gemäß Anspruch 2 oder einem der vorhergehenden Ansprüche 4 bis 12 in Kombination mit Anspruch 2, in dem das mindestens eine erste Bauteil (20) aus einem nicht schweißbarem bzw. elektrisch nicht leitenden Material besteht und das Schweißhilfsfügeteil (10) über einen Elektrodenstempel (40) eingetrieben und über einen Elektrodenniederhalter (60) geführt wird.

14. Verbindungsverfahren gemäß Anspruch 1 oder einem der Ansprüche 4 bis 12 in Kombination mit Anspruch 1 oder gemäß Anspruch 13, in dem der Elektrodenstempel (40) und der Elektrodenniederhalter (60) unterschiedliche elektrische Polarität aufweisen, so dass über das Schweißhilfsfügeteil (10) zwischen Elektrodenstempel (40) und Elektrodenniederhalter (60) ein Strom fließt, der zumindest das Schweißhilfsfügeteil (10) erwärmt.

15. Verbindungsverfahren gemäß einem der vorhergehenden Ansprüche 2 und 4 bis 12, in dem das mindestens eine erste Bauteil (20) aus einem schweißbaren bzw. elektrisch leitenden Material besteht und das Schweißhilfsfügeteil (10) über einen Elektrodenstempel (40) eingetrieben und über einen zum Schweißhilfsfügeteil (10) elektrisch isolierten Elektrodenniederhalter (60) geführt wird, wobei eine abstützende Elektrodenmatrize (50) elektrisch isoliert ist.

16. Verbindungsverfahren gemäß Anspruch 15, in dem der Elektrodenstempel (40) und der Elektrodenniederhalter (60) unterschiedliche Polarität aufweisen, so dass über das Schweißhilfsfügeteil (10) und das erste Bauteil (20; 22) zwischen Elektrodenstempel (40) und Elektrodenniederhalter (60) ein Strom fließt, und zumindest das Schweißhilfsfügeteil (10) erwärmt.

17. Verbindungsverfahren gemäß einem der vorhergehenden Ansprüche 2 und 4 bis 12, in dem das mindestens eine erste Bauteil (20) aus einem schweißbaren bzw. elektrisch leitenden Material besteht, und das Schweißhilfsfügeteil (10) über einen Elektrodenstempel (40) eingetrieben wird.

18. Verbindungsverfahren gemäß Anspruch 17, in dem der Elektrodenstempel (40) und eine Elektrodenmatrize (50) unterschiedliche Polarität aufweisen, so dass über das Schweißhilfsfügeteil (10) und das erste Bauteil (20; 22) zwischen Elektrodenstempel (40) und Elektrodenmatrize (50) ein Strom fließt, der zumindest das Schweißhilfsfügeteil (10) erwärmt.

19. Verbindungsverfahren gemäß Anspruch 1, 3, 13, 14, 15 oder 16, in dem das mindestens eine zweite Bauteil (30) sich an einer Elektrodenmatrize (50) mit einer dem Elektrodenstempel (40) entgegengesetzten Polarität abstützt, so dass ein Strom über Schweißhilfsfügeteil (10) und zweites Bauteil (30) zwischen Elektrodenstempel (40) und Elektrodenmatrize (50) fließt.

## Claims

1. Connection method by means of a welding auxiliary joining part (10) for at least a first component (20; 22) without pre-punching the at least one first component (20; 22) consisting of a non-weldable or electrically non-conductive material with at least a second component (30) of weldable or electrically conductive material or having a section of weldable or electrically conductive material, wherein the method comprises the following steps:
a. driving in of the welding auxiliary joining part (10) by means of an electrode punch (40) into the at least one first component (20) by means of a combined mechanical-thermal load of at least the welding auxiliary joining part (10), wherein the welding auxiliary joining part (10) is guided via an electrode blank holder (60) and the electrode punch (40) and the electrode blank holder (60) have different electrical polarities, so that a current flows between the electrode punch (40) and electrode blank holder (60) via the welding auxiliary joining part (10), which heats at least the welding auxiliary joining part (10),
b. deforming the welding auxiliary joining part (10) under combined mechanical-thermal load on the at least one second component (30) and
c. welding of the welding auxiliary joining part (10) to the at least one second component so that the at least one first component (20) and the at least one second component (30) are connected to each other by means of the welding auxiliary joining part (10), wherein
d. the connection method takes place continuously in a mechanical-thermal setting-welding-process.

2. Connection method by means of a welding auxiliary joining part (10) being electrically conductive or consisting of a weldable material to connect at least a first component (20; 22) of weldable or non-weldable or electrically conductive or non-conductive material without pre-punching the at least one first component (20; 22) to at least a second component (30) of weldable or electrically conductive material or having a section of weldable or electrically conductive material, wherein the connection method comprises the following steps:
a. driving of the welding auxiliary joining part (10) into the at least one first component (20; 22) by means of a combined mechanical-thermal load of at least the welding auxiliary joining part (10), wherein no waste material is separated from the at least one first component (20; 22),
b. deforming the welding auxiliary joining part (10) under combined mechanical-thermal load at a die (50) at an exit location out of the first component (20; 22) so that a weld head (70) of the welding auxiliary joining part (10) is created,
c. positioning of the first component with welding auxiliary joining part (10) and welding head (70) on the at least one second component (30) so that the welding head (70) abuts at the at least one second component (30) and
d. welding the welding head (70) of the welding auxiliary joining part (10) to the at least one second component (30) so that the at least one first component (20) and the at least one second component (30) are connected to each other by means of the welding auxiliary joining part (10).

3. Connection method by means of a welding auxiliary joining part (10) for at least a first component (20; 22) without pre-punching the at least one first component (20; 22) consisting of a weldable or electrically conductive material with at least a second component (30) of weldable or electrically conductive material or having a section of weldable or electrically conductive material, wherein the method comprises the following steps:
a. guiding the welding auxiliary joining part (10) by means of an electrode blank holder (60) electrically insulated from the welding auxiliary joining part (10) and driving the welding auxiliary joining part (10) by means of an electrode punch (40) into the at least one first component (20; 22) with a combined mechanical-thermal load at least on the welding auxiliary joining part (10), wherein a supporting electrode die (50) is electrically insulated and the electrode punch (40) and the electrode blank holder (60) have different polarities, so that a current flows between electrode punch (40) and electrode blank holder (60) via the welding auxiliary joining part (10) and the first component (20; 22) and heats at least the welding auxiliary joining part (10),
b. deforming the welding auxiliary joining part (10) under combined mechanical-thermal load on at least one second component (30) and
c. welding the welding auxiliary joining part (10) to the at least one second component (30) so that the at least one first component (20) and the at least one second component (30) are connected to each other by means of the welding auxiliary joining part (10), wherein
d. the connection method takes place continuously in a mechanical-thermal setting-welding process.

4. Connection method according to claim 1 or 2 wherein the at least one first component (20; 22) and the at least one second component (30) are welded by means of resistance stud welding or resistance spot welding.

5. Connection method according to one of the preceding claims, wherein the welding auxiliary joining part (10) is a stud having a head (12) or at least a tip portion (11), in which a head diameter is larger than a maximum thickness of the tip portion (11) and wherein the stud abuts the at least one first component (20; 22) with a head underside facing the at least one first component (20; 22) after completion of the connection method, or is spaced therefrom (S2; S3).

6. Connection method according to one of the preceding claims 1, 2 and 4, wherein the welding auxiliary joining part (10) is a stud having a head (12), in which a head diameter does not exceed a maximum thickness of the tip portion (11), and wherein the stud with the head (12) is flush with the at least one first component (20; 22) or protrudes therefrom (20; 22) after completion of the connection method.

7. Connection method according to claim 5, wherein the head (12) of the welding auxiliary joining part (10) has a circular groove (16) at a side facing the tip portion (11) for receiving a material deformation of a component (20; 22) adjacent to the head.

8. Connection method according to claim 5, wherein the tip portion (11) has an ogival tip having an ogivality factor in the range of 1 to 10 or a conical, a round, a parabolic or a pyramid-shaped design.

9. Connection method according to one of the preceding claims 1 and 4 to 8 in combination with claim 1, wherein during the deforming, a tip portion of the welding auxiliary joining part (10) is at least partly deformed to a welding head (70).

10. Connection method according to one of the preceding claims 1, 2 and 4 to 9, wherein the driving in (S4) by means of the mechanical-thermal load accelerates the welding auxiliary joining part (10) up to a speed in the range of > 0.5 m/s to 5 m/s, preferably 1 m/s to 4 m/s.

11. Connection method according to one of the preceding claims 1 and 4 to 10 in combination with claim 1, comprising:
compressing (S5; S8) the welding auxiliary joining part (10) at the at least one second component (30) of weldable or electrically conductive material which is arranged at the exit location of the welding auxiliary joining part (10) out of the at least one first component (20; 22).

12. Connection method according to one of the preceding claims 2 and 4 to 10 in combination with claim 2, comprising:
compressing (S5; S8) the welding auxiliary joining part (10) at the die (50) which is arranged at the exit location of the welding auxiliary joining part (10) out of the at least one first component (20; 22).

13. Connection method according to claim 2 or one of the preceding claims 4 to 12 in combination with claim 2, wherein
the at least one first component (20) consists of a non-weldable or an electrically non-conductive material and
the welding auxiliary joining part (10) is driven in by means of an electrode punch (40) and is guided by means of an electrode blank holder (60).

14. Connection method according to claim 1 or one of the claims 4 to 12 in combination with claim 1 or according to claim 13, wherein the electrode punch (40) and the electrode blank holder (60) have different electrical polarities so that a current flows between electrode punch and electrode blank holder via the welding auxiliary joining part which heats at least the welding auxiliary joining part.

15. Connection method according to one of the preceding claims 2 and 4 to 12, wherein
the at least one first component (20) consists of a weldable or electrically conductive material and
the welding auxiliary joining part (10) is driven in by means of an electrode punch (40) and is guided by means of an electrode blank holder (60) which is electrically insulated with respect to the welding auxiliary joining part (10), wherein a supporting electrode die (50) is electrically insulated.

16. Connection method according to claim 15, wherein the electrode punch (40) and the electrode blank holder (60) have different polarities so that a current flows between electrode punch (40) and electrode blank holder (60) via the welding auxiliary joining part (10) and the first component (20; 22), and heats at least the welding auxiliary joining part (10).

17. Connection method according to one of the preceding claims 2 and 4 to 12, wherein
the at least one first component (20) consists of a weldable or electrically conductive material and
the welding auxiliary joining part (10) is driven in by means of an electrode punch (40).

18. Connection method according to claim 17, wherein the electrode punch (40) and an electrode die (50) have different polarities so that a current flows between electrode punch (40) and electrode die (50) via the welding auxiliary joining part (10) and the first component (20; 22) which heats at least the welding auxiliary joining part (10).

19. Connection method according to claim 1, 3, 13, 14, 15 or 16, wherein the at least one second component (30) is supported at an electrode die (50) having a polarity opposite to the electrode punch (40) so that a current flows between electrode punch (40) and electrode die (50) via the welding auxiliary joining part (10) and the second component (30).

## Revendications

1. Procédé d'assemblage à l'aide d'une pièce de jonction d'aide au soudage (10) pour au moins un premier élément (20 ; 22) sans pré-perçage de l'au moins un premier élément (20 ; 22), lequel est constitué d'un matériau non soudable ou électriquement non conducteur, avec au moins un deuxième élément (30) constitué d'un matériau soudable ou électriquement conducteur ou avec une section constituée d'un matériau soudable ou électriquement conducteur, comprenant les étapes suivantes :
a. enfoncement de la pièce de jonction d'aide au soudage (10) par le biais d'un poinçon d'électrode (40) dans l'au moins un premier élément (20) avec une charge mécanique-thermique combinée au moins de la pièce de jonction d'aide au soudage (10), la pièce de jonction d'aide au soudage (10) étant guidée par un serre-flan d'électrode (60) et le poinçon d'électrode (40) et le serre-flan d'électrode (60) présentant une polarité électrique différente, de telle façon qu'un courant passe entre le poinçon d'électrode (40) et le serre-flan d'électrode (60) par le biais de la pièce de jonction d'aide au soudage (10), lequel chauffe au moins la pièce de jonction d'aide au soudage (10),
b. déformation de la pièce de jonction d'aide au soudage (10) sous charge mécanique-thermique combinée sur l'au moins un deuxième élément (30), et
c. soudage de la pièce de jonction d'aide au soudage (10) avec l'au moins un deuxième élément, de manière à relier l'au moins un premier élément (20) et l'au moins un deuxième élément (30) l'un à l'autre par le biais de la pièce de jonction d'aide au soudage (10), dans lequel
d. le procédé d'assemblage est mis en œuvre en continu dans un processus de pose-soudage mécanique-thermique.

2. Procédé d'assemblage à l'aide d'une pièce de jonction d'aide au soudage (10) constituée d'un matériau électriquement conducteur ou soudable, destiné à relier au moins un premier élément (20 ; 22) constitué d'un matériau soudable ou non soudable ou électriquement conducteur ou non conducteur, sans pré-perçage de l'au moins un premier élément (20 ; 22), à au moins un deuxième élément (30) constitué d'un matériau soudable ou électriquement conducteur ou à une section constituée d'un matériau soudable ou électriquement conducteur, le procédé d'assemblage comprenant les étapes suivantes :
a. enfoncement de la pièce de jonction d'aide au soudage (10) dans l'au moins un premier élément (20 ; 22) avec une charge mécanique-thermique combinée au moins de la pièce de jonction d'aide au soudage (10), aucun résidu n'étant séparé de l'au moins un premier élément (20 ; 22),
b. déformation de la pièce de jonction d'aide au soudage (10) sous charge mécanique-thermique combinée sur une matrice (50) au niveau d'une zone de sortie hors du premier élément (20 ; 22), de manière à créer une tête de soudage (70) de la pièce de jonction d'aide au soudage (10),
c. positionnement du premier élément avec la pièce de jonction d'aide au soudage (10) et la tête de soudage (70) sur l'au moins un deuxième élément (30), de manière à ce que la tête de soudage (70) s'applique sur l'au moins un deuxième élément (30), et
d. soudage de la tête de soudage (70) de la pièce de jonction d'aide au soudage (10) avec l'au moins un deuxième élément (30), de manière à relier l'au moins un premier élément (20) et l'au moins un deuxième élément (30) l'un à l'autre par le biais de la pièce de jonction d'aide au soudage (10).

3. Procédé d'assemblage à l'aide d'une pièce de jonction d'aide au soudage (10) pour au moins un premier élément (20 ; 22) sans pré-perçage de l'au moins un premier élément (20 ; 22), lequel est constitué d'un matériau soudable ou électriquement conducteur, avec au moins un deuxième élément (30) constitué d'un matériau soudable ou électriquement conducteur ou avec une section constituée d'un matériau soudable ou électriquement conducteur, comprenant les étapes suivantes :
a. guidage de la pièce de jonction d'aide au soudage (10) par le biais d'un serre-flan d'électrode (60) électriquement isolé de la pièce de jonction d'aide au soudage (10), et enfoncement de la pièce de jonction d'aide au soudage (10) par le biais d'un poinçon d'électrode (40) dans l'au moins un premier élément (20 ; 22) avec une charge mécanique-thermique combinée au moins de la pièce de jonction d'aide au soudage (10), une matrice d'électrode de soutien (50) étant isolée électriquement et le poinçon d'électrode (40) et le serre-flan d'électrode (60) présentant une polarité différente, de telle façon qu'un courant passe entre le poinçon d'électrode (40) et le serre-flan d'électrode (60) par le biais de la pièce de jonction d'aide au soudage (10) et le premier élément (20 ; 22), lequel chauffe au moins la pièce de jonction d'aide au soudage (10),
b. déformation de la pièce de jonction d'aide au soudage (10) sous charge mécanique-thermique combinée sur l'au moins un deuxième élément (30), et
c. soudage de la pièce de jonction d'aide au soudage (10) avec l'au moins un deuxième élément (30), de manière à relier l'au moins un premier élément (20) et l'au moins un deuxième élément (30) l'un à l'autre par le biais de la pièce de jonction d'aide au soudage (10), dans lequel
d. le procédé d'assemblage est mis en œuvre en continu dans un processus de pose-soudage mécanique-thermique.

4. Procédé d'assemblage selon la revendication 1 ou 2, dans lequel l'au moins un premier élément (20 ; 22) et l'au moins un deuxième élément (30) sont soudés par soudage à résistance des goujons ou par soudage à résistance par point.

5. Procédé d'assemblage selon l'une des revendications précédentes, dans lequel la pièce de jonction d'aide au soudage (10) est un goujon avec une tête (12) ou au moins une région de pointe (11), le diamètre de tête étant supérieur à une épaisseur maximale de la région de pointe (11), et dans lequel le goujon s'applique avec une face inférieure de tête tournée vers l'au moins un premier élément (20 ; 22) sur l'au moins un premier élément (20 ; 22) à la fin du procédé d'assemblage, tout en étant espacé de celui-ci (S2 ; S3).

6. Procédé d'assemblage selon l'une des revendications 1, 2 et 4, dans lequel la pièce de jonction d'aide au soudage (10) est un goujon avec une tête (12), le diamètre de tête ne dépassant pas une épaisseur maximale de la région de pointe (11), et dans lequel le goujon affleure avec la tête (12) l'au moins un premier élément (20 ; 22) à la fin du procédé d'assemblage, ou fait saillie à partir de celui-ci (20 ; 22).

7. Procédé d'assemblage selon la revendication 5, dans lequel la tête (12) de la pièce de jonction d'aide au soudage (10) présente une rainure annulaire (16) sur le côté tourné vers la région de pointe (11), pour accueillir une déformation de matériau d'un élément (20 ; 22) adjacent à la tête.

8. Procédé d'assemblage selon la revendication 5, dans lequel la région de pointe (11) présente une pointe ogivale avec un facteur d'ogivalité dans une plage de 1 à 10 ou une conception conique, ronde, parabolique ou pyramidale.

9. Procédé d'assemblage selon l'une des revendications précédentes 1 et 4 à 8 en combinaison avec la revendication 1, dans lequel, pendant la déformation, une région de pointe de la pièce de jonction d'aide au soudage (10) est au moins partiellement transformée en une tête de soudage (70).

10. Procédé d'assemblage selon l'une des revendications précédentes 1, 2 et 4 à 9, dans lequel l'enfoncement (S4) à l'aide de la charge mécanique-thermique fait accélérer la pièce de jonction d'aide au soudage (10) à une vitesse dans une plage de > 0,5 m/s à 5 m/s, de préférence de 1 m/s à 4 m/s.

11. Procédé d'assemblage selon l'une des revendications précédentes 1 et 4 à 10 en combinaison avec la revendication 1, présentant :
- le refoulement (S5 ; S8) de la pièce de jonction d'aide au soudage (10) sur l'au moins un deuxième élément (30) constitué d'un matériau soudable ou électriquement conducteur, lequel est disposé au niveau d'une zone de sortie de la pièce de jonction d'aide au soudage (10) hors de l'au moins un premier élément (20 ; 22).

12. Procédé d'assemblage selon l'une des revendications précédentes 2 et 4 à 10 en combinaison avec la revendication 2, présentant :
- le refoulement (S5 ; S8) de la pièce de jonction d'aide au soudage (10) sur la matrice (50), laquelle est disposée au niveau de la zone de sortie de la pièce de jonction d'aide au soudage (10) hors de l'au moins un premier élément (20 ; 22).

13. Procédé d'assemblage selon la revendication 2 ou l'une des revendications précédentes 4 à 12 en combinaison avec la revendication 2, dans lequel
- l'au moins un premier élément (20) est constitué d'un matériau non soudable ou électriquement non conducteur et la pièce de jonction d'aide au soudage (10) est enfoncée par le biais d'un poinçon d'électrode (40) et guidé par le biais d'un serre-flan d'électrode (60).

14. Procédé d'assemblage selon la revendication 1 ou l'une des revendications 4 à 12 en combinaison avec la revendication 1 ou selon la revendication 13, dans lequel le poinçon d'électrode (40) et le serre-flan d'électrode (60) présentent une polarité électrique différente, de telle façon qu'un courant passe par le biais de la pièce de jonction d'aide au soudage (10) entre le poinçon d'électrode (40) et le serre-flan d'électrode (60), lequel chauffe au moins la pièce de jonction d'aide au soudage (10).

15. Procédé d'assemblage selon l'une des revendications précédentes 2 et 4 à 12, dans lequel
- l'au moins un premier élément (20) est constitué d'un matériau soudable ou électriquement conducteur et
- la pièce de jonction d'aide au soudage (10) est enfoncée par le biais d'un poinçon d'électrode (40) et guidée par le biais d'un serre-flan d'électrode (60) électriquement isolé de la pièce de jonction d'aide au soudage (10), dans lequel une matrice d'électrode de soutien (50) est électriquement isolée.

16. Procédé d'assemblage selon la revendication 15, dans lequel le poinçon d'électrode (40) et le serre-flan d'électrode (60) présentent une polarité différente, de telle façon qu'un courant passe par le biais de la pièce de jonction d'aide au soudage (10) et du premier élément (20 ; 22) entre le poinçon d'électrode (40) et le serre-flan d'électrode (60), et chauffe au moins la pièce de jonction d'aide au soudage (10).

17. Procédé d'assemblage selon l'une des revendications précédentes 2 et 4 à 12, dans lequel
- l'au moins un premier élément (20) est constitué d'un matériau soudable ou électriquement conducteur, et
- la pièce de jonction d'aide au soudage (10) est enfoncée par le biais d'un poinçon d'électrode (40).

18. Procédé d'assemblage selon la revendication 17, dans lequel le poinçon d'électrode (40) et une matrice d'électrode (50) présentent une polarité différente, de telle façon qu'un courant passe par le biais de la pièce de jonction d'aide au soudage (10) et du premier élément (20 ; 22) entre le poinçon d'électrode (40) et la matrice d'électrode (50), lequel chauffe au moins la pièce de jonction d'aide au soudage (10).

19. Procédé d'assemblage selon la revendication 1, 3, 13, 14, 15 ou 16, dans lequel l'au moins un deuxième élément (30) s'appuie sur une matrice d'électrode (50) avec une polarité opposée à celle du poinçon d'électrode (40), de telle façon qu'un courant passe par le biais de la pièce de jonction d'aide au soudage (10) et du deuxième élément (30) entre le poinçon d'électrode (40) et la matrice d'électrode (50).
